# EUROPEAN PATENT SPECIFICATION

(11) **EP 4 258 809 B1**
(45) Date of publication and mention of the grant of the patent: **19.08.2026**
(21) Application number: 21899876.3
(22) Date of filing: 18.11.2021
(51) Int. Cl.: H04W 76/14, H04W 76/15, H04W 88/04, H04W 48/16

(54) **MESSAGE NOTIFICATION METHOD AND APPARATUS, TERMINAL DEVICE, RELAY DEVICE, AND STORAGE MEDIUM**
NACHRICHTENBENACHRICHTIGUNGSVERFAHREN UND -VORRICHTUNG, ENDGERÄTEVORRICHTUNG, RELAISVORRICHTUNG UND SPEICHERMEDIUM
PROCÉDÉ ET APPAREIL DE NOTIFICATION DE MESSAGE, DISPOSITIF TERMINAL, DISPOSITIF RELAIS ET SUPPORT DE STOCKAGE

(30) Priority: 03.12.2020 CN 202011412796
(43) Date of publication of application: 11.10.2023
(73) Proprietor: Datang Mobile Communications Equipment Co., Ltd., Beijing 100085 (CN)
(72) Inventor: ZHAO, Yali, Beijing 100085 (CN); ZHANG, Huiying, Beijing 100085 (CN); XU, Hao, Beijing 100085 (CN)
(74) Representative: Studio Torta S.p.A.
(86) International application number: PCT/CN2021/131363
(87) International publication number: WO 2022/116842

(56) References cited:
- WO-A1-2018/064477
- CN-A- 106 572 514
- CN-A- 107 211 297
- CN-A- 107 535 012
- CN-A- 107 690 832
- US-A1- 2018 070 281
- US-A1- 2018 092 017
- US-A1- 2018 279 275
- US-A1- 2020 178 343
- QUALCOMM INCORPORATED ET AL: "KI#3, Sol#23: Update N3IWF selection for Layer-3 UE-to-Network Relay", vol. SA WG2, no. E (e-meeting); 20200819 - 20200901, 25 October 2020 (2020-10-25), XP051948347, Retrieved from the Internet <URL:https://ftp.3gpp.org/tsg_sa/WG2_Arch/TSGS2_141e_Electronic/Docs/S2-2008282.zip S2-2008282 was 7689r04-pCR N3IWF selection for L3 UE-to-NW relay.doc> [retrieved on 20201025]
- QUALCOMM INCORPORATED, INTERDIGITAL INC.: "S2-20078282 KI#3, Sol#23: Update N3IWF selection for Layer-3 UE-to-Network Relay", 3GPP TSG_SA\WG2_ARCH, 25 October 2020 (2020-10-25), XP051948347

## Description

### FIELD

The present application relates to the field of communication technologies, and in particular, to methods and apparatuses for message notification, a user equipment (UE), a relay UE.

### BACKGROUND

In order to extend network coverage, a solution in which a UE-to-Network relay is introduced is provided. For the UE-to-Network relay scenario, a remote UE needs to be acknowledged of a public land mobile network (PLMN) that corresponds to a cell connected by the remote UE via a relay UE. In the traditional mechanism, the relay UE is required to forward broadcast messages from a network, such as a system information block type 1 (SIB1) message which is carrying the PLMN. However, the forwarding of the system message is independent of a relay discovery message, which cannot guarantee that the remote UE is able to receive the system message when receiving the relay discovery message and the remote UE performs relay selection/reselection before the PLMN information is obtained, which increases delay for relay selection/reselection and may even cause service interruption.

A contribution by Qualcomm Incorporated and Interdigital Inc., titled "KI#3, So123: Update N3IWF selection for Layer-3 UE-to-Network Relay", for the SA WG2 Meeting #140E, Elbonia, 19th Aug -1st Sep, 2020, no. S2-20078282, proposes a solution for selecting an N3IWF for Layer-3 UE-to-Network Relay using N3IWF.

US20180279275A1 discloses a method of facilitating reporting assistance information for sidelink service in a wireless communication system, including: entering, by the mobile device, a connected state; and transmitting, by the mobile device, a message to a network node after entering the connected state, wherein the message comprises a first indication for requesting asystem information for sidelink and a second indication for requesting transmission resource for a sidelink service.

However, in the related art, when a relay UE transmits PLMN ID information to a remote UE, the PLMN of the relay UE in various service scenarios cannot be determined.

### SUMMARY

The present application provide methods and apparatuses for message notification, a user equipment (UE) and a relay UE, which solve the problem of delay for relay selection/reselection or service interruption caused by inability to determine the PLMN corresponding to a cell connected to a relay UE after a remote UE receives related messages transmitted by the relay UE, and solve the problem that when the relay UE transmits PLMN ID information to the remote UE, the PLMN of the relay UE in various service scenarios cannot be determined.

The invention is set out in the appended set of claims.

By the methods and apparatuses for message notification, the UE, the relay UE, and the storage medium according to the embodiments of the present application, the PLMN corresponding to the serving cell of the relay UE can be directly determined based on the PLMN information carried in the message transmitted by the relay UE, that is, the PLMN can be determined without forwarding broadcast messages from the network through the relay UE, and the problem of delay for relay selection/reselection or service interruption caused by inability to determine the PLMN corresponding to a cell connected to the relay UE after a remote UE receives related messages transmitted by the relay UE may be solved. In addition, according to the embodiments of the present application, the PLMN corresponding to the serving cell of the relay UE can be directly determined based on the PLMN information carried in the message transmitted by the relay UE, unnecessary sidelink broadcast can be reduced, resources are saved and workload for developing standard is decreased.

### BRIEF DESCRIPTION OF THE DRAWINGS

In order to clearly illustrate solutions according to the embodiments of the present application, the drawings used in the descriptions of the embodiments are briefly described below. The drawings in the following description are only certain embodiments of the present application, and other drawings may be obtained according to these drawings without creative work for those skilled in the art.
FIG. 1 is a schematic diagram of a communication mode for centralized network control according to an embodiment of the present application;
FIG. 2 is a schematic diagram of sidelink interface discovery/communication according to an embodiment of the present application;
FIG. 3 is a schematic diagram of a UE-to-Network relay according to an embodiment of the present application;
FIG. 4 is a schematic structural diagram of a sidelink (SL) medium access control (MAC) protocol data unit (PDU) according to an embodiment of the present application;
FIG. 5 is a schematic structural diagram of a sidelink-shared channel (SL-SCH) MAC subheader according to an embodiment of the present application;
FIG. 6 is a schematic structural diagram of a MAC subheader of MAC subPDU (L field of 8 bits) according to an embodiment of the present application;
FIG. 7 is a schematic structural diagram of a MAC subheader of MAC subPDU (L field of 16 bits) according to an embodiment of the present application;
FIG. 8 is a schematic flowchart of a method for message notification applied to a UE according to an embodiment of the present application;
FIG. 9 is a schematic flowchart of a method for message notification applied to a relay UE according to an embodiment of the present application;
FIG. 10 is a schematic diagram of an interaction procedure in case of carrying, in an SL-SCH MAC subheader corresponding to an SL MAC PDU, PLMN information corresponding to a cell connected to the relay UE according to an embodiment of the present application;
FIG. 11 is a schematic structural diagram of an SL-SCH MAC subheader according to an embodiment of the present application;
FIG. 12 is a schematic diagram of an interaction procedure in case of carrying, in a MAC subheader corresponding to a MAC subPDU in an SL MAC PDU, PLMN information corresponding to a cell connected to the relay UE according to an embodiment of the present application;
FIG. 13 is a schematic structural diagram of a MAC subheader corresponding to a MAC subPDU according to an embodiment of the present application;
FIG. 14 is a schematic diagram of an interaction procedure in case of implicitly determining PLMN information corresponding to a cell connected to the relay UE through a resource used in the transmission of messages related to relay discovery according to an embodiment of the present application;
FIG. 15 is a schematic diagram of an interaction procedure in case of carrying, in sidelink control information (SCI), PLMN information corresponding to a cell connected to the relay UE according to an embodiment of the present application;
FIG. 16 is a schematic block diagram of an apparatus for message notification applied to a UE according to an embodiment of the present application;
FIG. 17 is a schematic block diagram of an apparatus for message notification applied to a relay UE according to an embodiment of the present application;
FIG. 18 is a schematic structural diagram of a UE according to an embodiment of the present application; and
FIG. 19 is a schematic structural diagram of a relay UE according to an embodiment of the present application.

### DETAILED DESCRIPTION

The solutions according to the embodiments of the present application are clearly described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without creative work are within the scope of the present application.

In an embodiment, in order to extend network coverage, a solution is to introduce a UE-to-Network relay (hereinafter referred to as a relay). A relay may be a UE having a relaying function, where an interface between the relay and the network is a Uu interface, and an interface between the relay and a remote UE is a direct communication interface. A link between the relay and the network may be referred to as a backhaul link (BH) for the remote UE. After the relay is introduced, in order to simplify the description, the following terms are introduced:
direct connection: the UE is directly connected to the network device through the Uu interface; and
indirect connection: the UE is connected to the network device through the relay UE.

There are currently three communication modes: (1) a traditional cellular network communication mode; (2) a direct communication mode; and (3) a relay communication mode.

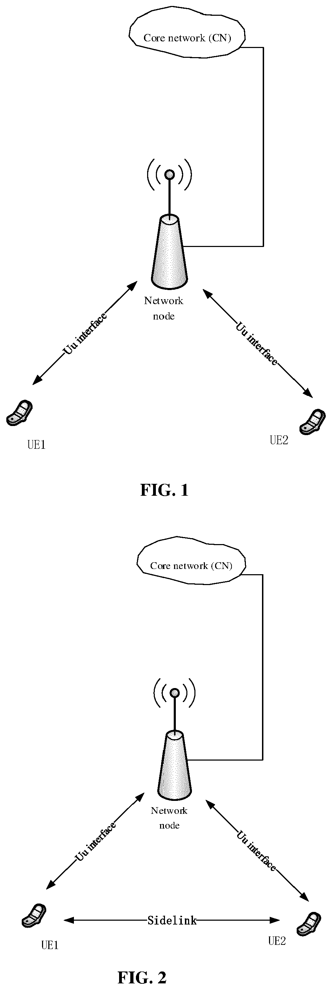

For (1) the traditional cellular network communication mode, as shown in FIG. 1, the UE and the network side device transmit uplink and downlink data/control information through the Uu interface.

For (2) the direct communication mode, as shown in FIG. 2, it is a mode in which neighbor UEs can perform data transmission through a direct communication link (also called sidelink or PC5) within a short distance. A radio interface corresponding to the sidelink is referred to as a direct communication interface (also referred to as a sidelink interface or a PC5 interface).

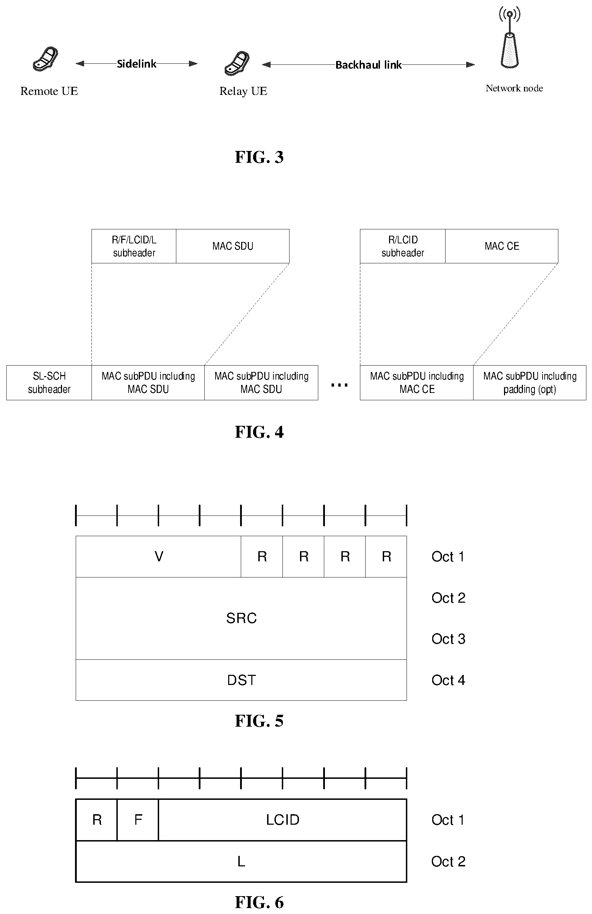

For (3) relay communication mode, a relay UE is introduced to extend network coverage. The relay UE may be a UE having a relaying function. For UE-to-Network relay, an interface between the relay and the network is a Uu interface, and an interface between the relay and a remote UE is a direct communication interface (also called sidelink interface or PC5 interface). A link between the relay and the network may be referred to as a backhaul link for the remote UE. The schematic diagram of the UE-to-Network relay is shown in FIG. 3.

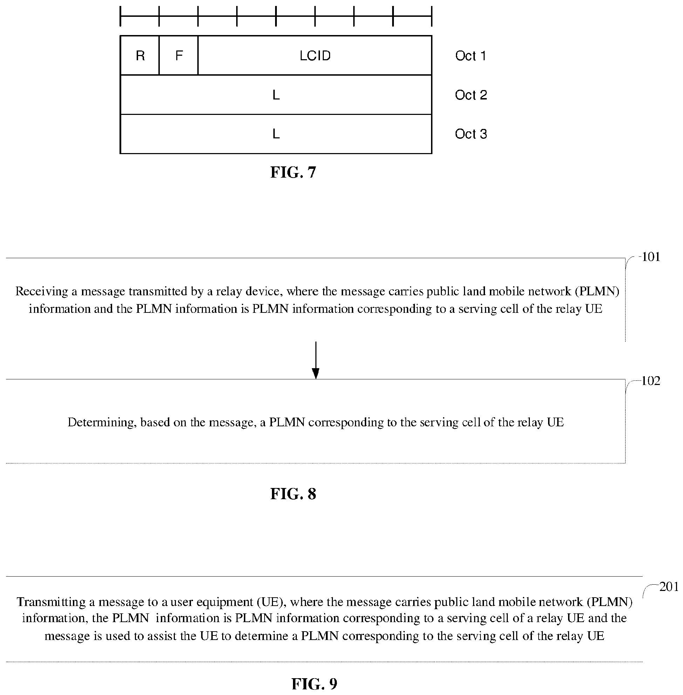

The structure of a sidelink (SL) medium access control (MAC) protocol data unit (PDU) is explained below with reference to FIGS. 4 to 7. The structure of the traditional SL MAC PDU is shown in FIG. 4, where a sidelink shared channel (SL-SCH) subheader is an SL-SCH subheader corresponding to the SL MAC PDU and includes the contents as shown in FIG. 5. Each MAC subPDU including MAC SDU also includes a MAC subheader, and has a given format as shown in FIGS. 6 and 7.

It should be noted that for the UE-to-Network relay scenario, the remote UE needs to obtain PLMN corresponding to the cell connected to the remote UE through the relay UE. In the traditional mechanism, the relay UE is required to forward broadcast messages from a network, such as a system information block type 1 (SIB1) message carrying the PLMN. However, the forwarding of the system message is independent of a relay discovery message, it fails to guarantee that the remote UE is able to receive the system message when receiving the relay discovery message, and the remote UE performs relay selection/reselection until the PLMN information is obtained, which increases delay for relay selection/reselection and may even cause service interruption. Embodiments of the present application provide a method for message notification, in which PLMN information corresponding to a cell connected to the relay UE can be directly indicated during the procedure of transmitting, by the relay UE, the message related to relay, which solve the problem of delay for relay selection/reselection or service interruption caused by inability to determine the PLMN corresponding to a cell connected to the relay UE after a remote UE receives related messages transmitted by the relay UE. In addition, according to the embodiments of the present application, the PLMN corresponding to the serving cell of the relay UE can be directly determined based on the PLMN information carried in the message transmitted by the relay UE, unnecessary sidelink broadcast can be reduced, resources are saved and workload for developing standard is decreased. Methods and apparatuses for message notification, a UE, a relay UE, and a storage medium according to the present application are explained and described in detail below in conjunction with embodiments.

The methods and the apparatuses are based on the same conception. Since the principles of the methods and the apparatuses to solve the problems are similar, the implementation of the apparatuses and methods can be referred to each other, and the similar part is not repeated.

In addition, the solutions according to the embodiments of the present application may be applicable to various systems, especially 5G systems. For example, the applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. Each of these various systems includes a UE and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, the terminal device may be called as user equipment (UE). A radio terminal device can communicate with one or more core networks (CNs) via a radio access network (RAN), and the radio terminal device can be a mobile terminal device, such as a mobile phone (or cellular phone) or a computer with mobile terminal device, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A radio terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application. Since the terminal device and other network devices (such as core network device, access network device (i.e. network side device)) together form a network that can support communication, the terminal device may be regarded as a network device in the present application.

The network device in the embodiments of the present application may be a base station, and the base station may include multiple cells for serving terminals, or may be a central unit (CU) or a distributed unit (DU). Depending on the specific application, the network device may be called an access point, or may be a device in the access network that communicates with radio terminal device through one or more sectors on the air interface, or other names. Network device can be used to exchange received air frames with internet protocol (IP) packets, and act as a router between radio terminal device and the rest of the access network, where the rest of the access network may include an IP communication network. The network devices may also coordinate attribute management for the air interface. For example, the network device in the embodiments of the present application may be a base transceiver station (BTS) in a global system for mobile communications (GSM) or a code division multiple access (CDMA), may be a node B in a wide-band code division multiple access (WCDMA), may be an evolutional node B (eNB or e-Node B) in a long term evolution (LTE) system, may be a 5G base station (gNB) in 5G network architecture (next generation system), or may be a home evolved node B (HeNB), a relay node, a femto, a pico base station (pico), etc., which are not limited in the embodiments of the present application. In some network structures, a network device may include a centralized unit (CU) node and a distributed unit (DU) node, and the centralized unit and the distributed unit may be geographically separated.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

Furthermore, it should be noted that "one embodiment" or "an embodiment" throughout the specification means that a particular feature, structure, or characteristic associated with the embodiment is included in at least one embodiment of the present application. Thus, "in one embodiment" or "in an embodiment" throughout this specification does not necessarily refer to the same embodiment. Furthermore, the particular features, structures or characteristics may be combined in any suitable manner in one or more embodiments.

The present application is described below in detail.

FIG. 8 is a schematic flowchart showing steps of a method for message notification applied to a user equipment (UE) according to the claimed invention and the method includes the following steps:
step 101, receiving a message transmitted by a relay UE, where the message carries public land mobile network (PLMN) information and the PLMN information is PLMN information corresponding to a serving cell of the relay UE.

In the step 101, the UE may determine the PLMN corresponding to the serving cell of the relay UE based on the message transmitted by the relay UE to the UE since the message transmitted by the relay UE to the UE directly carries the PLMN information and the PLMN information is used for indicating the PLMN corresponding to the serving cell of the relay UE. As such, the PLMN is determined without forwarding broadcast messages from the network through the relay UE and the problem of delay for relay selection/reselection or service interruption caused by inability to determine the PLMN corresponding to the cell connected to the relay UE after a remote UE receives related messages transmitted by the relay UE may be solved. In addition, according to the embodiments of the present application, the PLMN corresponding to the serving cell of the relay UE can be directly determined based on the PLMN information carried in the message transmitted by the relay UE, unnecessary sidelink broadcast can be reduced, resources are saved and workload for developing standard is decreased.

In the step 101, for example, the message transmitted by the relay UE is a message related to relay discovery. The message related to relay discovery may include a relay discovery message and/or a response message corresponding to a relay discovery message, which is not limited in this embodiment.

Step 102, determining, based on the message, a PLMN corresponding to the serving cell of the relay UE.

In the step 102, the UE may directly determine, based on the message transmitted by the relay UE, the PLMN corresponding to the serving cell of the relay UE. It should be noted that in the present embodiment, the PLMN information corresponding to a cell connected to the relay UE can be directly indicated during the procedure of the relay UE transmits a message related to relay, as such, the UE can directly determine, based on the message related to relay transmitted by the relay UE, the PLMN corresponding to the serving cell of the relay UE, and then a problem of delay for relay selection/reselection or service interruption caused by asynchronization between the message related to relay discovery and system information block (SIB) indicating the PLMN is avoided.

In order to better illustrate the solutions according to the embodiments of the present application, the method for determining the PLMN corresponding to the serving cell of the relay UE in the related art is introduced below for comparison. In the traditional method for determining the PLMN corresponding to the serving cell of the relay UE, the relay UE is required to forward broadcast messages from a network, such as a system information block type 1 (SIB1) message carrying the PLMN. However, the forwarding of the system message is independent of a relay discovery message, it fails to guarantee that the remote UE is able to receive the system message when receiving the message related to relay discovery, and the remote UE performs relay selection/reselection until the PLMN information is obtained, which increases delay for relay selection/reselection and may even cause service interruption. In the present application, the PLMN information corresponding to a cell connected to the relay UE can be directly indicated during the procedure of the relay UE transmits message related to relay, as such, the UE can directly determine, based on the message related to relay transmitted by the relay UE, the PLMN corresponding to the serving cell of the relay UE, and then a problem of delay for relay selection/reselection or service interruption caused by asynchronization between the message related to relay discovery and SIB indicating the PLMN is avoided.

By the method for message notification according to the embodiments of the present application, the PLMN corresponding to the serving cell of the relay UE can be directly determined based on the PLMN information carried in the message transmitted by the relay UE, that is, the PLMN can be determined without forwarding broadcast messages from the network through the relay UE, and the problem of delay for relay selection/reselection or service interruption caused by inability to determine the PLMN corresponding to a cell connected to the relay UE after a remote UE receives related messages transmitted by the relay UE may be solved. In addition, according to the embodiments of the present application, the PLMN corresponding to the serving cell of the relay UE can be directly determined based on the PLMN information carried in the message transmitted by the relay UE, unnecessary sidelink broadcast can be reduced, resources are saved and workload for developing standard is decreased.

Based on the above embodiment,
in case that there is only one serving cell of the relay UE, the PLMN information indicates PLMN corresponding to the serving cell of the relay UE;
in case that there are multiple serving cells of the relay UE, the PLMN information indicates PLMN corresponding to a primary cell (PCell) of the relay UE, for example, the PLMN information is that the PLMN information corresponding to the serving cell of the relay UE only includes the PLMN corresponding to the PCell;
in case that there are multiple serving cells of the relay UE and the multiple serving cells correspond to different network devices, the PLMN information indicates PLMN corresponding to a primary cell (PCell) of a master network node for the relay UE, for example, the PLMN information is that the PLMN information corresponding to the serving cell of the relay UE only includes the PLMN corresponding to the PCell of the master network node;
in case that there are multiple serving cells of the relay UE and the multiple serving cells correspond to the same PLMN, the PLMN information indicates the PLMN, where the multiple PLMNs are the same, and the PLMN information only needs to indicate any one of the PLMNs, that is, the PLMN information is that the PLMN information corresponding to the serving cell of the relay UE only includes the PLMN; or
in case that there are multiple serving cells of the relay UE and the multiple serving cells correspond to different PLMNs, the PLMN information indicates a set of the different PLMNs, where the multiple PLMNs are different, and the multiple different PLMNs constitute a set including all the different PLMNs, that is, the PLMN information is that the PLMN information corresponding to the serving cell of the relay UE includes the set of the PLMNs.

In the present embodiment, various implementations of PLMN information are shown to meet requirements of various service scenarios.

Based on the above embodiments, in the present embodiment, the message transmitted by the relay UE includes any one of:
a relay discovery message;
a response message corresponding to a relay discovery message; and
sidelink control information (SCI) that allocates a resource for a relay discovery message or a response message corresponding to the relay discovery message.

In the present embodiment, the message transmitted by the relay UE may be a message related to relay discovery. The message related to relay discovery may be the relay discovery message, or the response message corresponding to the relay discovery message, or the SCI that allocates a resource for the relay discovery message or the response message corresponding to the relay discovery message. In the present embodiment, the PLMN corresponding to the serving cell of the relay UE can be directly determined based on the PLMN carried in the relay discovery message, or the response message corresponding to the relay discovery message, or the SCI that allocates a resource for the relay discovery message or the response message corresponding to the relay discovery message, which can implement the objectives of the embodiments of the present application.

Based on the above embodiments, in the present embodiment, the receiving the message transmitted by the relay UE, where the message carries PLMN information, includes any one of:
explicitly carrying the PLMN information in the message transmitted by the relay UE; and
implicitly carrying the PLMN information based on a resource used by the message transmitted by the relay UE.

In the present embodiment, in case that the PLMN information is carried in the message transmitted by the relay UE, there are two carrying modes including an explicit carrying mode and an implicit carrying mode. For the explicit carrying mode, the PLMN information is explicitly carried in the message transmitted by the relay UE. For the implicit carrying mode, the PLMN information is implicitly carried based on the resource used by the message transmitted by the relay UE. Regardless of the explicit carrying mode or the implicit carrying mode, the PLMN corresponding to the serving cell of the relay UE can be determined based on the message transmitted by the relay UE, that is, the PLMN can be determined without forwarding broadcast messages from the network through the relay UE, and the problem of delay for relay selection/reselection or service interruption caused by inability to determine the PLMN corresponding to a cell connected to the relay UE after a remote UE receives related messages transmitted by the relay UE may be solved. In addition, according to the embodiments of the present application, the PLMN corresponding to the serving cell of the relay UE can be directly determined based on the PLMN information carried in the message transmitted by the relay UE, unnecessary sidelink broadcast can be reduced, resources are saved and workload for developing standard is decreased.

Based on the above embodiments, in the present embodiment, the explicitly carrying the PLMN information in the message transmitted by the relay UE, includes any one of:
explicitly carrying the PLMN information in a medium access control (MAC) protocol data unit (PDU) carrying the message transmitted by the relay UE; and
explicitly carrying the PLMN information in sidelink control information (SCI) transmitted by the relay UE.

In the present embodiment, the explicitly carrying the PLMN information may be implemented by:
(1) explicitly carrying the PLMN information in a MAC PDU carrying the message transmitted by the relay UE; and/or
(2) explicitly carrying the PLMN information in SCI transmitted by the relay UE.

In the present embodiment, in case that the PLMN information is carried in the message transmitted by the relay UE, one implementation mode may be to explicitly carry the PLMN information in the MAC PDU carrying the message transmitted by the relay UE and the other implementation mode may be to explicitly carry the PLMN information in the SCI transmitted by the relay UE. Through any of these two implementation modes, the PLMN information can be explicitly carried in the message transmitted by the relay UE to implement the objectives of the present application.

Based on the above embodiments, in the present embodiment, the explicitly carrying the PLMN information in a MAC PDU carrying the message transmitted by the relay UE includes at least one of the following schemes:
scheme 1: explicitly carrying the PLMN information in a sidelink-shared channel (SL-SCH) MAC subheader corresponding to a sidelink (SL) MAC PDU carrying the message transmitted by the relay UE; or
scheme 2: explicitly carrying the PLMN information in a MAC subheader corresponding to a sidelink (SL) MAC subPDU carrying the message transmitted by the relay UE.

In the present embodiment, in case that the PLMN information is explicitly carried in the MAC PDU carrying the message transmitted by the relay UE, one implementation mode may be to explicitly carry the PLMN information in the SL-SCH MAC subheader corresponding to the SL MAC PDU carrying the message transmitted by the relay UE and the other implementation mode may be to explicitly carry the PLMN information in the MAC subheader corresponding to the SL MAC subPDU carrying the message transmitted by the relay UE. Through any of these two implementation modes, the PLMN information can be explicitly carried in the MAC PDU carrying the message transmitted by the relay UE to implement the objectives of the present application.

Based on the above embodiments, in the present embodiment, for the scheme 1, a reserved bit in the SL-SCH MAC subheader is used for indicating whether the SL-SCH MAC subheader includes the PLMN information or a V field in the SL-SCH MAC subheader is set to a preset value to indicate whether the SL-SCH MAC subheader includes the PLMN information; and/or
for the scheme 2, a reserved bit in the MAC subheader corresponding to the SL MAC subPDU is used for indicating whether the MAC subheader includes the PLMN information.

In the present embodiment, for the scheme 1 of explicitly carrying the PLMN information in the SL-SCH MAC subheader corresponding to the SL MAC PDU carrying the message transmitted by the relay UE, a reserved bit in the SL-SCH MAC subheader may be used for indicating whether the SL-SCH MAC subheader includes the PLMN information or a V field in the SL-SCH MAC subheader may be set to a preset value to indicate whether the SL-SCH MAC subheader includes the PLMN information. For the scheme 2 of explicitly carrying the PLMN information in the MAC subheader corresponding to the SL MAC subPDU carrying the message transmitted by the relay UE, a reserved bit in the MAC subheader corresponding to the SL MAC subPDU may be used for indicating whether the MAC subheader includes the PLMN information. By any of these two schemes, the UE may determine whether there is PLMN information based on the reserved bit or the V field, as such, the processing efficiency of the UE is increased.

Based on the above embodiments, in the present embodiment, the explicitly carrying the PLMN information in the SCI transmitted by the relay UE, includes at least one of:
in case that the SCI is split into first-stage SCI and second-stage SCI, explicitly carrying the PLMN information only in the first-stage SCI;
in case that the SCI is split into first-stage SCI and second-stage SCI, explicitly carrying the PLMN information only in the second-stage SCI; or
in case that the SCI is split into first-stage SCI and second-stage SCI, explicitly carrying the PLMN information in both the first-stage SCI and the second-stage SCI.

In the present embodiment, in case that the PLMN information is explicitly carried in the SCI transmitted by the relay UE, there may be multiple implementations. For example, in case that the SCI is separated into the first-stage SCI and the second-stage SCI, the PLMN information may be only explicitly carried in the first-stage SCI; or the PLMN information may be only explicitly carried in the second-stage SCI; or the PLMN information may be explicitly carried in both the first-stage SCI and the second-stage SCI. In the present embodiment, the PLMN information is explicitly carried in the SCI transmitted by the relay UE, and the objectives of the present application can be achieved.

Based on the foregoing embodiment, in the present embodiment, the method further includes at least one of the following steps:
for a relay UE meeting a preset condition, determining a PLMN corresponding to a serving cell of the relay UE, and transmitting the PLMN to a non-access stratum (NAS) layer for the UE for assisting the NAS layer for the UE to perform PLMN selection; or
for a relay UE meeting a preset condition, determining a PLMN corresponding to a serving cell of the relay UE, and performing relay UE selection and/or relay UE reselection based on the PLMN.

In the present embodiment, after obtaining the PLMN information, the UE may perform, using the PLMN information, at least one of the following operations:
(1) for the relay UE meeting the preset condition, determining the PLMN corresponding to the serving cell of the relay UE, and transmitting the PLMN to the NAS layer for the UE for assisting the NAS layer for the UE to perform PLMN selection; or
(2) for the relay UE meeting the preset condition, determining the PLMN corresponding to the serving cell of the relay UE, and performing relay UE selection and/or relay UE reselection based on the PLMN.

In the present embodiment, after the UE obtains the PLMN information, operations performed by the UE using the PLMN information are protected. The operations performed by using the PLMN information may include two cases: (1) transmitting the PLMN to the NAS layer for the UE for assisting the NAS layer for the UE to perform PLMN selection; and (2) performing relay UE selection and/or relay UE reselection based on the PLMN. Any of them can achieve an objective of communication.

Based on the foregoing embodiments, in the present embodiment, for the relay UE meeting the preset condition, the determining the PLMN corresponding to the serving cell of the relay UE, and performing relay UE selection and/or relay UE reselection based on the PLMN, includes:
in case that the UE performs relay UE selection and/or relay UE reselection, selecting, based on the PLMN corresponding to the serving cell of the relay UE, a relay UE of which a serving cell corresponding to a PLMN consistent with a PLMN selected by the UE.

In the present embodiment, in case that the UE performs relay UE selection and/or relay UE reselection, the UE may select, based on the PLMN corresponding to the serving cell of the relay UE, a relay UE of which a serving cell corresponding to a PLMN consistent with a PLMN selected by the UE, which increases the processing efficiency of the UE, and avoids the problem of service interruption caused by the inconsistency of selected PLMN.

Based on the foregoing embodiments, in the present embodiment, the preset condition includes at least one of the followings:
a channel quality of a sidelink interface between a UE and a relay UE being greater than a first threshold; or
a channel quality of a Uu interface between a relay UE and a network device being greater than a second threshold.

In the present embodiment, before the PLMN corresponding to the serving cell of the relay UE is determined, it is first judged whether the relay UE meets the preset condition, and in case that the relay UE meets the preset condition, for the relay UE meeting the preset condition, the PLMN corresponding to the serving cell of the relay UE is determined, which improves the processing efficiency of the UE, and avoids determining the PLMN transmitted by the relay UE that does not meet the communication conditions as the basis for subsequent processing.

FIG. 9 is a schematic flowchart showing steps of a method for message notification applied to a relay UE according to the claimed invention, where the method includes the following steps:
step 201, transmitting a message to a user equipment (UE), where the message carries public land mobile network (PLMN) information, the PLMN information is PLMN information corresponding to a serving cell of the relay UE and the message is used to assist the UE to determine a PLMN corresponding to the serving cell of the relay UE.

In the step 201, the UE may determine the PLMN corresponding to the serving cell of the relay UE based on the message transmitted by the relay UE to the UE since the message transmitted by the relay UE to the UE directly carries the PLMN information and the PLMN information is used for indicating the PLMN corresponding to the serving cell of the relay UE. As such, the PLMN is determined without forwarding broadcast messages from the network through the relay UE and the problem of delay for relay selection/reselection or service interruption caused by inability to determine the PLMN corresponding to the cell connected to the relay UE after a remote UE receives related messages transmitted by the relay UE may be solved. In addition, according to the embodiments of the present application, the PLMN corresponding to the serving cell of the relay UE can be directly determined based on the PLMN information carried in the message transmitted by the relay UE, unnecessary sidelink broadcast can be reduced, resources are saved and workload for developing standard is decreased.

In the step 201, for example, the message transmitted by the relay UE is a message related to relay discovery. The message related to relay discovery may include a relay discovery message and/or a response message corresponding to a relay discovery message, which is not limited in this embodiment.

In the step 201, the UE may directly determine, based on the message transmitted by the relay UE, the PLMN corresponding to the serving cell of the relay UE. It should be noted that in the present embodiment, the PLMN information corresponding to a cell connected to the relay UE can be directly indicated during the procedure of the relay UE transmits message related to relay, as such, the UE can directly determine, based on the message related to relay transmitted by the relay UE, the PLMN corresponding to the serving cell of the relay UE, and then a problem of delay for relay selection/reselection or service interruption caused by asynchronization between the message related to relay discovery and system information block (SIB) indicating the PLMN is avoided.

In order to better illustrate the solutions according to the embodiments of the present application, the method for determining the PLMN corresponding to the serving cell of the relay UE in the related art is introduced below for comparison. In the traditional method for determining the PLMN corresponding to the serving cell of the relay UE, the relay UE is required to forward broadcast messages from a network, such as a system information block type 1 (SIB1) message carrying the PLMN. However, the forwarding of the system message is independent of a relay discovery message, it fails to guarantee that the remote UE is able to receive the system message when receiving the message related to relay discovery, and the remote UE performs relay selection/reselection until the PLMN information is obtained, which increases delay for relay selection/reselection and may even cause service interruption. In the present application, the PLMN information corresponding to a cell connected to the relay UE can be directly indicated during the procedure of the relay UE transmits message related to relay, as such, the UE can directly determine, based on the message related to relay transmitted by the relay UE, the PLMN corresponding to the serving cell of the relay UE, and then a problem of delay for relay selection/reselection or service interruption caused by asynchronization between the message related to relay discovery and SIB indicating the PLMN is avoided.

By the method for message notification according to the embodiments of the present application, the PLMN corresponding to the serving cell of the relay UE can be directly determined based on the PLMN information carried in the message transmitted by the relay UE, that is, the PLMN can be determined without forwarding broadcast messages from the network through the relay UE, and the problem of delay for relay selection/reselection or service interruption caused by inability to determine the PLMN corresponding to a cell connected to the relay UE after a remote UE receives related messages transmitted by the relay UE may be solved. In addition, according to the embodiments of the present application, the PLMN corresponding to the serving cell of the relay UE can be directly determined based on the PLMN information carried in the message transmitted by the relay UE, unnecessary sidelink broadcast can be reduced, resources are saved and workload for developing standard is decreased.

Based on the above embodiment,
in case that there is only one serving cell of the relay UE, the PLMN information indicates PLMN corresponding to the serving cell of the relay UE;
in case that there are multiple serving cells of the relay UE, the PLMN information indicates PLMN corresponding to a primary cell (PCell) of the relay UE;
in case that there are multiple serving cells of the relay UE and the multiple serving cells correspond to different network devices, the PLMN information indicates PLMN corresponding to a primary cell (PCell) of a master network node for the relay UE;
in case that there are multiple serving cells of the relay UE and the multiple serving cells correspond to the same PLMN, the PLMN information indicates the PLMN; or
in case that there are multiple serving cells of the relay UE and the multiple serving cells correspond to different PLMNs, the PLMN information indicates a set of the different PLMNs.

In the present embodiment, various implementations of PLMN information are shown to meet requirements of various service scenarios.

Based on the above embodiments, in the present embodiment, the message transmitted by the relay UE includes any one of:
a relay discovery message;
a response message corresponding to a relay discovery message; and
sidelink control information (SCI) that allocates a resource for a relay discovery message or a response message corresponding to the relay discovery message.

In the present embodiment, the message transmitted by the relay UE may be a message related to relay discovery. The message related to relay discovery may be the relay discovery message, or the response message corresponding to the relay discovery message, or the SCI that allocates a resource for the relay discovery message or the response message corresponding to the relay discovery message. In the present embodiment, the PLMN corresponding to the serving cell of the relay UE can be directly determined based on the PLMN carried in the relay discovery message, or the response message corresponding to the relay discovery message, or the SCI that allocates a resource for the relay discovery message or the response message corresponding to the relay discovery message, which can implement the objectives of the embodiments of the present application.

Based on the above embodiments, in the present embodiment, the transmitting the message to the UE, where the message carries PLMN information, includes any one of:
explicitly carrying the PLMN information in the message transmitted by the relay UE; and
implicitly carrying the PLMN information based on a resource used by the message transmitted by the relay UE.

In the present embodiment, in case that the PLMN information is carried in the message transmitted by the relay UE, there are two carrying modes including an explicit carrying mode and an implicit carrying mode. For the explicit carrying mode, the PLMN information is explicitly carried in the message transmitted by the relay UE. For the implicit carrying mode, the PLMN information is implicitly carried based on the resource used by the message transmitted by the relay UE. Regardless of the explicit carrying mode or the implicit carrying mode, the PLMN corresponding to the serving cell of the relay UE can be determined based on the message transmitted by the relay UE, that is, the PLMN can be determined without forwarding broadcast messages from the network through the relay UE, and the problem of delay for relay selection/reselection or service interruption caused by inability to determine the PLMN corresponding to a cell connected to the relay UE after a remote UE receives related messages transmitted by the relay UE may be solved. In addition, according to the embodiments of the present application, the PLMN corresponding to the serving cell of the relay UE can be directly determined based on the PLMN information carried in the message transmitted by the relay UE, unnecessary sidelink broadcast can be reduced, resources are saved and workload for developing standard is decreased.

Based on the above embodiments, in the present embodiment, the explicitly carrying the PLMN information in the message transmitted by the relay UE, includes any one of:
explicitly carrying the PLMN information in a medium access control (MAC) protocol data unit (PDU) carrying the message transmitted by the relay UE; and
explicitly carrying the PLMN information in sidelink control information (SCI) transmitted by the relay UE.

In the present embodiment, the explicitly carrying the PLMN information may be implemented by:
(1) explicitly carrying the PLMN information in a MAC PDU carrying the message transmitted by the relay UE; and/or
(2) explicitly carrying the PLMN information in SCI transmitted by the relay UE.

In the present embodiment, in case that the PLMN information is carried in the message transmitted by the relay UE, one implementation mode may be to explicitly carry the PLMN information in the MAC PDU carrying the message transmitted by the relay UE and the other implementation mode may be to explicitly carry the PLMN information in the SCI transmitted by the relay UE. Through any of these two implementation modes, the PLMN information can be explicitly carried in the message transmitted by the relay UE to implement the objectives of the present application.

Based on the above embodiments, in the present embodiment, the explicitly carrying the PLMN information in a MAC PDU carrying the message transmitted by the relay UE includes at least one of the following schemes:
scheme 1: explicitly carrying the PLMN information in a sidelink-shared channel (SL-SCH) MAC subheader corresponding to a sidelink (SL) MAC PDU carrying the message transmitted by the relay UE; or
scheme 2: explicitly carrying the PLMN information in a MAC subheader corresponding to a sidelink (SL) MAC subPDU carrying the message transmitted by the relay UE.

In the present embodiment, in case that the PLMN information is explicitly carried in the MAC PDU carrying the message transmitted by the relay UE, one implementation mode may be to explicitly carry the PLMN information in the SL-SCH MAC subheader corresponding to the SL MAC PDU carrying the message transmitted by the relay UE and the other implementation mode may be to explicitly carry the PLMN information in the MAC subheader corresponding to the SL MAC subPDU carrying the message transmitted by the relay UE. Through any of these two implementation modes, the PLMN information can be explicitly carried in the MAC PDU carrying the message transmitted by the relay UE to implement the objectives of the present application.

Based on the above embodiments, in the present embodiment, for the scheme 1, a reserved bit in the SL-SCH MAC subheader is used for indicating whether the SL-SCH MAC subheader includes the PLMN information or a V field in the SL-SCH MAC subheader is set to a preset value to indicate whether the SL-SCH MAC subheader includes the PLMN information; and/or
for the scheme 2, a reserved bit in the MAC subheader corresponding to the SL MAC subPDU is used for indicating whether the MAC subheader includes the PLMN information.

In the present embodiment, for the scheme 1 of explicitly carrying the PLMN information in the SL-SCH MAC subheader corresponding to the SL MAC PDU carrying the message transmitted by the relay UE, a reserved bit in the SL-SCH MAC subheader may be used for indicating whether the SL-SCH MAC subheader includes the PLMN information or a V field in the SL-SCH MAC subheader may be set to a preset value to indicate whether the SL-SCH MAC subheader includes the PLMN information. For the scheme 2 of explicitly carrying the PLMN information in the MAC subheader corresponding to the SL MAC subPDU carrying the message transmitted by the relay UE, a reserved bit in the MAC subheader corresponding to the SL MAC subPDU may be used for indicating whether the MAC subheader includes the PLMN information. By any of these two schemes, the UE may determine whether there is PLMN information based on the reserved bit or the V field, as such, the processing efficiency of the UE is increased.

Based on the above embodiments, in the present embodiment, the explicitly carrying the PLMN information in SCI transmitted by the relay UE, includes at least one of:
in case that the SCI is split into first-stage SCI and second-stage SCI, explicitly carrying the PLMN information only in the first-stage SCI;
in case that the SCI is split into first-stage SCI and second-stage SCI, explicitly carrying the PLMN information only in the second-stage SCI; or
in case that the SCI is split into first-stage SCI and second-stage SCI, explicitly carrying the PLMN information in both the first-stage SCI and the second-stage SCI.

In the present embodiment, in case that the PLMN information is explicitly carried in the SCI transmitted by the relay UE, there may be multiple implementations. For example, in case that the SCI is separated into the first-stage SCI and the second-stage SCI, the PLMN information may be only explicitly carried in the first-stage SCI; or the PLMN information may be only explicitly carried in the second-stage SCI; or the PLMN information may be explicitly carried in both the first-stage SCI and the second-stage SCI. In the present embodiment, the PLMN information is explicitly carried in the SCI transmitted by the relay UE, and the objectives of the present application can be achieved.

The present application is described below through specific embodiments.

### Embodiment 1

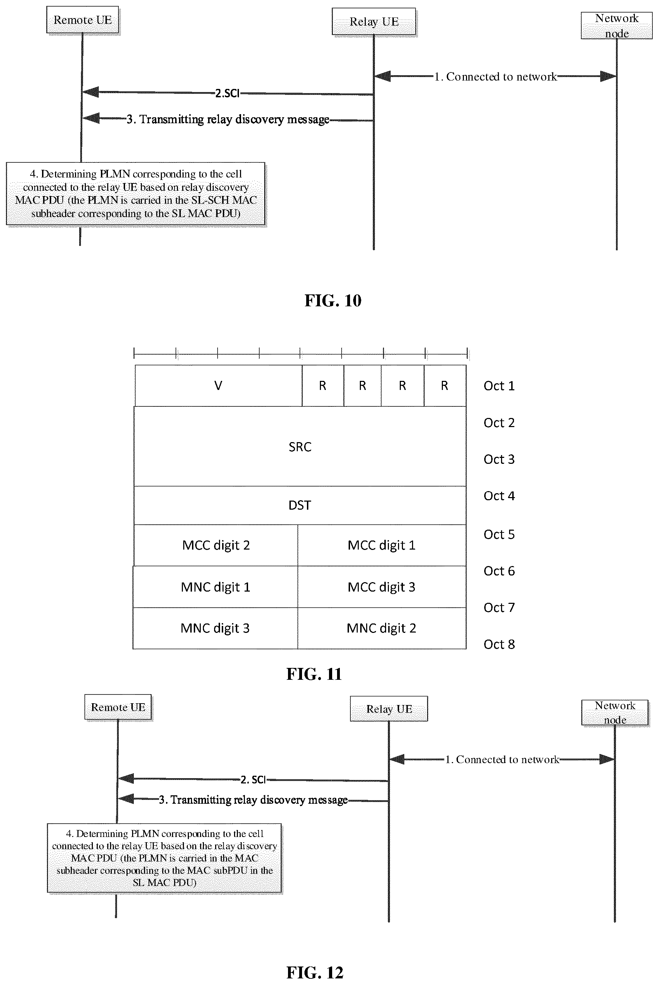

As shown in FIG. 10, the processing flow of carrying the PLMN information corresponding to the cell connected to the relay UE in the SL-SCH MAC subheader corresponding to the SL MAC PDU is given in the present embodiment, and the processing flow includes the following steps:
step 1: the relay UE is connected to a network.

In the step 1, the relay UE first performs PLMN selection to determine the PLMN to be used, and then performs cell selection to determine the cell to be connected.

Step 2: the relay UE transmits SCI.

In the step 2, the SCI is used to schedule resources used for a relay discovery message transmitted by the relay UE in step 3.

Step 3: the relay UE transmits the relay discovery message.

In the step 3, the relay discovery message is carried by an SL MAC PDU on the air interface, and the PLMN information corresponding to the cell connected to the relay UE is carried in the SL-SCH MAC subheader corresponding to the SL MAC PDU.

An example of a format of the SL-SCH MAC subheader is shown in FIG. 11.

The combination of MCC and MNC represents the PLMN information. FIG. 11 is only a schematic diagram of a format of the SL-SCH MAC subheader, positions of the MCC and the MNC in the SL-SCH MAC subheader can be changeable, and the order of the MCC and the MNC is variable, which all are within the protection scope of the present application.

In addition, a reserved bit or a preset value of the V field in the SL-SCH MAC subheader can be used to indicate whether the SL-SCH MAC subheader includes the PLMN information corresponding to the cell connected to the relay UE.

Step 4: the remote UE determines the PLMN corresponding to the cell connected to the relay UE based on the relay discovery MAC PDU.

After receiving the SL MAC PDU, the remote UE may determine the PLMN information corresponding to the cell connected to the relay UE based on the PLMN information carried in the SL-SCH MAC subheader.

After obtaining the PLMN information, the remote UE may perform, using the PLMN information, at least one of the following operations.
(1) The remote UE determines the PLMN information corresponding to the cell connected to each relay UE based on the relay discovery messages transmitted by the relay UEs, and then reports discovery PLMNs meeting preset conditions to the UE NAS layer to perform PLMN selection.
(2) The remote UE determines the PLMN information corresponding to the cell connected to each relay UE based on the relay discovery messages transmitted by the relay UEs, and then performs relay selection and/or relay reselection based on the PLMN information selected by itself.

The "preset condition" may be, but not limited to, at least one of:
A, a channel quality of a sidelink interface between a remote UE and a relay UE being greater than a threshold; or
B, a channel quality of a Uu interface between a relay UE and a network device being greater than a threshold.

### Embodiment 2

As shown in FIG. 12, the processing flow of carrying the PLMN information corresponding to the cell connected to the relay UE in the MAC subheader corresponding to the MAC subPDU in the SL MAC PDU is given in the present embodiment, and the processing flow includes the following steps:
step 1: the relay UE is connected to a network.

In the step 1, the relay UE first performs PLMN selection to determine the PLMN to be used, and then performs cell selection to determine the cell to be connected.

Step 2: the relay UE transmits SCI.

In the step 2, the SCI is used to schedule resources used for a relay discovery message transmitted by the relay UE in step 3.

Step 3: the relay UE transmits the relay discovery message.

In the step 3, the relay discovery message is carried by an SL MAC PDU on the air interface, and the PLMN information corresponding to the cell connected to the relay UE is carried in the MAC subheader corresponding to the MAC subPDU in the SL MAC PDU.

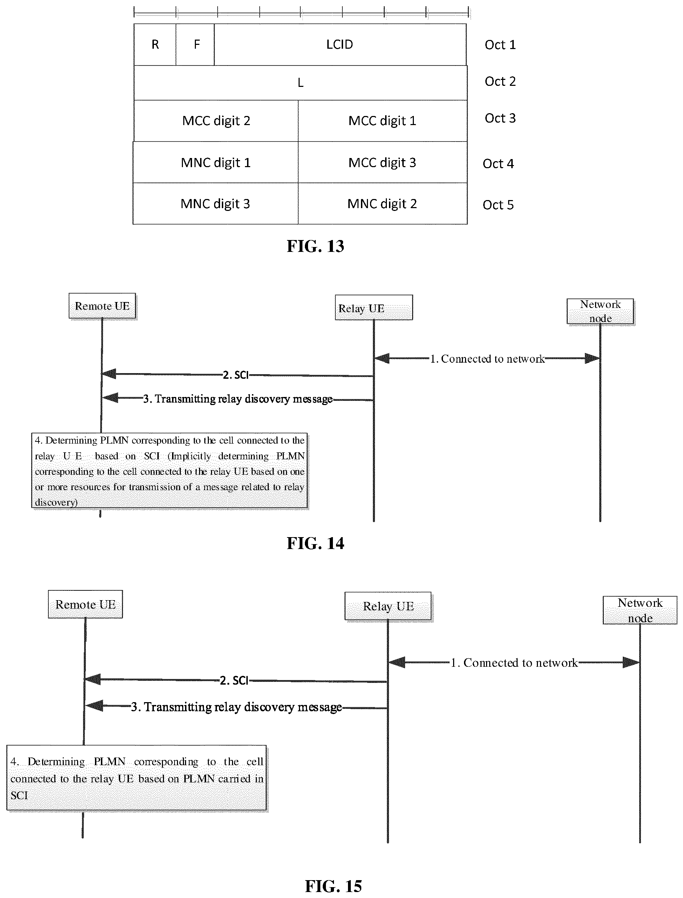

An example of a format of the MAC subheader corresponding to the MAC subPDU is shown in FIG. 13. In FIG. 13, a length of the L field is 8 bits as an example, and the schematic diagram of the length of the L field being 16 bits is similar, and the example is not repeated.

The combination of MCC and MNC represents the PLMN information. FIG. 13 is only a schematic diagram of a format of the MAC subheader corresponding to the MAC subPDU, positions of the MCC and the MNC in the MAC subheader corresponding to the MAC subPDU can be changeable, and the order of the MCC and the MNC is variable, which all are within the protection scope of the present application.

In addition, a reserved bit in the MAC subheader corresponding to the MAC subPDU can be used to indicate whether the MAC subheader corresponding to the MAC subPDU includes the PLMN information corresponding to the cell connected to the relay UE.

Step 4: the remote UE determines the PLMN corresponding to the cell connected to the relay UE based on the relay discovery MAC PDU.

After receiving the SL MAC PDU, the remote UE may determine the PLMN information corresponding to the cell connected to the relay UE based on the PLMN information carried in the MAC subheader corresponding to the MAC subPDU. After obtaining the PLMN information, the remote UE may perform, using the PLMN information, at least one of the following operations.
(1) The remote UE determines the PLMN information corresponding to the cell connected to each relay UE based on the relay discovery messages transmitted by the relay UEs, and then reports discovery PLMNs meeting preset conditions to the UE NAS layer to perform PLMN selection.
(2) The remote UE determines the PLMN information corresponding to the cell connected to each relay UE based on the relay discovery messages transmitted by the relay UEs, and then performs relay selection and/or relay reselection based on the PLMN information selected by itself.

The "preset condition" may be, but not limited to, at least one of:
A, a channel quality of a sidelink interface between a remote UE and a relay UE being greater than a threshold; or
B, a channel quality of a Uu interface between a relay UE and a network device being greater than a threshold.

### Embodiment 3

As shown in FIG. 14, the processing flow of implicitly determining PLMN information corresponding to the cell connected to the relay UE through the resource used in the transmission for the message related to relay discovery is given in the present embodiment, and the processing flow includes the following steps:
Step 1: the relay UE is connected to a network.

In the step 1, the relay UE first performs PLMN selection to determine the PLMN to be used, and then performs cell selection to determine the cell to be connected.

Step 2: the relay UE transmits SCI.

In the step 2, the SCI is used to schedule resources used for a relay discovery message transmitted by the relay UE in step 3.

Since different PLMNs correspond to different sidelink interface resources, the PLMN information corresponding to the cell connected to the relay UE can be implicitly determined through one or more resources for the transmission of a message related to relay discovery.

Step 3: the relay UE transmits the relay discovery message.

Step 4: the remote UE determines the PLMN corresponding to the cell connected to the relay UE based on the sidelink interface resources used by the relay discovery message.

After determining the PLMN information corresponding to the cell connected to the relay UE, the remote UE may perform, using the PLMN information, at least one of the following operations.
(1) The remote UE determines the PLMN information corresponding to the cell connected to each relay UE based on the relay discovery messages transmitted by the relay UEs, and then reports discovery PLMNs meeting preset conditions to the UE NAS layer to perform PLMN selection.
(2) The remote UE determines the PLMN information corresponding to the cell connected to each relay UE based on the relay discovery messages transmitted by the relay UEs, and then performs relay selection and/or relay reselection based on the PLMN information selected by itself.

The "preset condition" may be, but not limited to, at least one of:
A, a channel quality of a sidelink interface between a remote UE and a relay UE being greater than a threshold; or
B, a channel quality of a Uu interface between a relay UE and a network device being greater than a threshold.

### Embodiment 4

As shown in FIG. 15, the processing flow of carrying the PLMN information corresponding to the cell connected to the relay UE in sidelink control information (SCI) is given in the present embodiment, and the processing flow includes the following steps:
Step 1: the relay UE is connected to a network.

In the step 1, the relay UE first performs PLMN selection to determine the PLMN to be used, and then performs cell selection to determine the cell to be connected.

Step 2: the relay UE transmits SCI.

In the step 2, the SCI is used to schedule resources used for a relay discovery message transmitted by the relay UE in step 3.

The carrying the PLMN information corresponding to the cell connected to the relay UE in the SCI may include carrying the PLMN information corresponding to the cell connected to the relay UE in a first-stage SCI (PSCCH) or in a second-stage SCI (PSSCH).

Step 3: the relay UE transmits the relay discovery message.

Step 4: the remote UE determines the PLMN corresponding to the cell connected to the relay UE based on the SCI.

After determining the PLMN information corresponding to the cell connected to the relay UE, the remote UE may perform, using the PLMN information, at least one of the following operations.
(1) The remote UE determines the PLMN information corresponding to the cell connected to each relay UE based on the relay discovery messages transmitted by the relay UEs, and then reports discovery PLMNs meeting preset conditions to the UE NAS layer to perform PLMN selection.
(2) The remote UE determines the PLMN information corresponding to the cell connected to each relay UE based on the relay discovery messages transmitted by the relay UEs, and then performs relay selection and/or relay reselection based on the PLMN information selected by itself.

The "preset condition" may be, but not limited to, at least one of:
A, a channel quality of a sidelink interface between a remote UE and a relay UE being greater than a threshold; or
B, a channel quality of a Uu interface between a relay UE and a network device being greater than a threshold.

In the present application, the PLMN information corresponding to the cell connected to the relay UE is explicitly carried in the MAC PDU associated with relay discovery or in the SCI transmitted by the relay UE; or the PLMN information corresponding to the cell connected to the relay UE is implicitly carried in one or more resources for the transmission of a message related to relay discovery by the relay UE. Compared with the traditional mechanism, the method for PLMN notification according to the present application has the following advantages: it can be ensured that the remote UE can determine PLMN corresponding to the cell connected to the relay UE transmitting a relay message while receiving the message related to relay discovery, which can decrease workload for developing standard, reduce unnecessary sidelink broadcasts, and save resources.

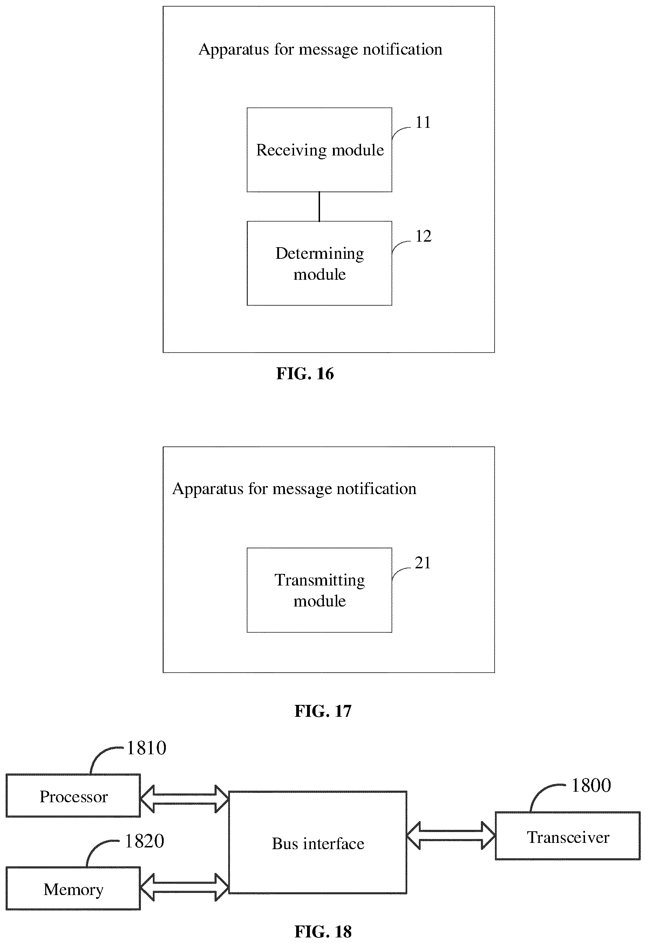

FIG. 16 is a schematic block diagram of an apparatus for message notification applied to a user equipment (UE) according to an embodiment of the present application. The apparatus includes:
a receiving module 11, used to receive a message transmitted by a relay UE, where the message carries public land mobile network (PLMN) information and the PLMN information is PLMN information corresponding to a serving cell of the relay UE; and
a determining module 12, used to determine, based on the message, a PLMN corresponding to the serving cell of the relay UE.

Based on the above embodiment, in an embodiment,
in case that there is only one serving cell of the relay UE, the PLMN information indicates PLMN corresponding to the serving cell of the relay UE;
in case that there are multiple serving cells of the relay UE, the PLMN information indicates PLMN corresponding to a primary cell (PCell) of the relay UE;
in case that there are multiple serving cells of the relay UE and the multiple serving cells correspond to different network devices, the PLMN information indicates PLMN corresponding to a primary cell (PCell) of a master network node for the relay UE;
in case that there are multiple serving cells of the relay UE and the multiple serving cells correspond to the same PLMN, the PLMN information indicates the PLMN; or
in case that there are multiple serving cells of the relay UE and the multiple serving cells correspond to different PLMNs, the PLMN information indicates a set of the different PLMNs.

In the present embodiment, various implementations of PLMN information are shown to meet requirements of various service scenarios.

Based on the above embodiments, in the present embodiment, the message transmitted by the relay UE includes any one of:
a relay discovery message;
a response message corresponding to a relay discovery message; and
sidelink control information (SCI) that allocates a resource for a relay discovery message or a response message corresponding to the relay discovery message.

In the present embodiment, the message transmitted by the relay UE may be a message related to relay discovery. The message related to relay discovery may be a relay discovery message, or a response message corresponding to a relay discovery message. In the present embodiment, the PLMN corresponding to the serving cell of the relay UE may be directly determined based on the PLMN carried in the relay discovery message, or the response message corresponding to the relay discovery message, which can implement the objectives of the embodiments of the present application.

Based on the above embodiments, in the present embodiment, the receiving the message transmitted by the relay UE, where the message carries PLMN information, includes any one of:
explicitly carrying the PLMN information in the message transmitted by the relay UE; and
implicitly carrying the PLMN information based on a resource used by the message transmitted by the relay UE.

In the present embodiment, in case that the PLMN information is carried in the message transmitted by the relay UE, there are two carrying modes including an explicit carrying mode and an implicit carrying mode. For the explicit carrying mode, the PLMN information is explicitly carried in the message transmitted by the relay UE. For the implicit carrying mode, the PLMN information is implicitly carried based on the resource used by the message transmitted by the relay UE. Regardless of the explicit carrying mode or the implicit carrying mode, the PLMN corresponding to the serving cell of the relay UE can be determined based on the message transmitted by the relay UE, that is, the PLMN can be determined without forwarding broadcast messages from the network through the relay UE, and the problem of delay for relay selection/reselection or service interruption caused by inability to determine the PLMN corresponding to a cell connected to the relay UE after a remote UE receives related messages transmitted by the relay UE may be solved. In addition, according to the embodiments of the present application, the PLMN corresponding to the serving cell of the relay UE can be directly determined based on the PLMN information carried in the message transmitted by the relay UE, unnecessary sidelink broadcast can be reduced, resources are saved and workload for developing standard is decreased.

Based on the above embodiments, in the present embodiment, the explicitly carrying the PLMN information in the message transmitted by the relay UE, includes any one of:
explicitly carrying the PLMN information in a medium access control (MAC) protocol data unit (PDU) carrying the message transmitted by the relay UE; and
explicitly carrying the PLMN information in sidelink control information (SCI) transmitted by the relay UE.

In the present embodiment, the explicitly carrying the PLMN information may be implemented by:
(1) explicitly carrying the PLMN information in a MAC PDU carrying the message transmitted by the relay UE; and/or
(2) explicitly carrying the PLMN information in SCI transmitted by the relay UE.

In the present embodiment, in case that the PLMN information is carried in the message transmitted by the relay UE, one implementation mode may be to explicitly carry the PLMN information in the MAC PDU carrying the message transmitted by the relay UE and the other implementation mode may be to explicitly carry the PLMN information in the SCI transmitted by the relay UE. Through any of these two implementation modes, the PLMN information can be explicitly carried in the message transmitted by the relay UE to implement the objectives of the present application.

Based on the above embodiments, in the present embodiment, the explicitly carrying the PLMN information in a MAC PDU carrying the message transmitted by the relay UE includes at least one of the following schemes:
scheme 1: explicitly carrying the PLMN information in a sidelink-shared channel (SL-SCH) MAC subheader corresponding to a sidelink (SL) MAC PDU carrying the message transmitted by the relay UE; or
scheme 2: explicitly carrying the PLMN information in a MAC subheader corresponding to a sidelink (SL) MAC subPDU carrying the message transmitted by the relay UE.

In the present embodiment, in case that the PLMN information is explicitly carried in the MAC PDU carrying the message transmitted by the relay UE, one implementation mode may be to explicitly carry the PLMN information in the SL-SCH MAC subheader corresponding to the SL MAC PDU carrying the message transmitted by the relay UE and the other implementation mode may be to explicitly carry the PLMN information in the MAC subheader corresponding to the SL MAC subPDU carrying the message transmitted by the relay UE. Through any of these two implementation modes, the PLMN information can be explicitly carried in the MAC PDU carrying the message transmitted by the relay UE to implement the objectives of the present application.

Based on the above embodiments, in the present embodiment, for the scheme 1, a reserved bit in the SL-SCH MAC subheader is used for indicating whether the SL-SCH MAC subheader includes the PLMN information or a V field in the SL-SCH MAC subheader is set to a preset value to indicate whether the SL-SCH MAC subheader includes the PLMN information; and/or
for the scheme 2, a reserved bit in the MAC subheader corresponding to the SL MAC subPDU is used for indicating whether the MAC subheader includes the PLMN information.

In the present embodiment, for the scheme 1 of explicitly carrying the PLMN information in the SL-SCH MAC subheader corresponding to the SL MAC PDU carrying the message transmitted by the relay UE, a reserved bit in the SL-SCH MAC subheader may be used for indicating whether the SL-SCH MAC subheader includes the PLMN information or a V field in the SL-SCH MAC subheader may be set to a preset value to indicate whether the SL-SCH MAC subheader includes the PLMN information. For the scheme 2 of explicitly carrying the PLMN information in the MAC subheader corresponding to the SL MAC subPDU carrying the message transmitted by the relay UE, a reserved bit in the MAC subheader corresponding to the SL MAC subPDU may be used for indicating whether the MAC subheader includes the PLMN information. By any of these two schemes, the UE may determine whether there is PLMN information based on the reserved bit or the V field, as such, the processing efficiency of the UE is increased.

Based on the above embodiments, in the present embodiment, the explicitly carrying the PLMN information in the SCI transmitted by the relay UE, includes at least one of:
in case that the SCI is split into first-stage SCI and second-stage SCI, explicitly carrying the PLMN information only in the first-stage SCI;
in case that the SCI is split into first-stage SCI and second-stage SCI, explicitly carrying the PLMN information only in the second-stage SCI; or
in case that the SCI is split into first-stage SCI and second-stage SCI, explicitly carrying the PLMN information in both the first-stage SCI and the second-stage SCI.

In the present embodiment, in case that the PLMN information is explicitly carried in the SCI transmitted by the relay UE, there may be multiple implementations. For example, in case that the SCI is separated into the first-stage SCI and the second-stage SCI, the PLMN information may be only explicitly carried in the first-stage SCI; or the PLMN information may be only explicitly carried in the second-stage SCI; or the PLMN information may be explicitly carried in both the first-stage SCI and the second-stage SCI. In the present embodiment, the PLMN information is explicitly carried in the SCI transmitted by the relay UE, and the objectives of the present application can be achieved.

Based on the above embodiments, in the present embodiment, the apparatus further includes a processing module, used to perform at least one of the following steps:
for a relay UE meeting a preset condition, determining a PLMN corresponding to a serving cell of the relay UE, and transmitting the PLMN to a non-access stratum (NAS) layer for the UE for assisting the NAS layer for the UE to perform PLMN selection; or
for a relay UE meeting a preset condition, determining a PLMN corresponding to a serving cell of the relay UE, and performing relay UE selection and/or relay UE reselection based on the PLMN.

In the present embodiment, after obtaining the PLMN information, the UE may perform, using the PLMN information, at least one of the following operations:
(1) for the relay UE meeting the preset condition, determining the PLMN corresponding to the serving cell of the relay UE, and transmitting the PLMN to the NAS layer for the UE for assisting the NAS layer for the UE to perform PLMN selection; or
(2) for the relay UE meeting the preset condition, determining the PLMN corresponding to the serving cell of the relay UE, and performing relay UE selection and/or relay UE reselection based on the PLMN.

In the present embodiment, after the UE obtains the PLMN information, operations performed by the UE using the PLMN information are protected. The operations performed by using the PLMN information may include two cases: (1) transmitting the PLMN to the NAS layer for assisting the NAS layer for the UE to perform PLMN selection; and (2) performing relay UE selection and/or relay UE reselection based on the PLMN. Any of them can achieve an objective of communication.

Based on the foregoing embodiments, in the present embodiment, for the relay UE meeting the preset condition, the determining the PLMN corresponding to the serving cell of the relay UE, and performing relay UE selection and/or relay UE reselection based on the PLMN, includes:
in case that the UE performs relay UE selection and/or relay UE reselection, selecting, based on the PLMN corresponding to the serving cell of the relay UE, a relay UE of which a serving cell corresponding to a PLMN consistent with a PLMN selected by the UE.

In the present embodiment, in case that the UE performs relay UE selection and/or relay UE reselection, the UE may select, based on the PLMN corresponding to the serving cell of the relay UE, a relay UE of which a serving cell corresponding to a PLMN consistent with a PLMN selected by the UE, which increases the processing efficiency of the UE, and avoids the problem of service interruption caused by the inconsistency of selected PLMN.

Based on the foregoing embodiments, in the present embodiment, the preset condition includes at least one of the followings:
a channel quality of a sidelink interface between a UE and a relay UE being greater than a first threshold; or
a channel quality of a Uu interface between a relay UE and a network device being greater than a second threshold.

In the present embodiment, before the PLMN corresponding to the serving cell of the relay UE is determined, it is first judged whether the relay UE meets the preset condition, and in case that the relay UE meets the preset condition, for the relay UE meeting the preset condition, the PLMN corresponding to the serving cell of the relay UE is determined, which improves the processing efficiency of the UE, and avoids determining the PLMN transmitted by the relay UE that does not meet the communication conditions as the basis for subsequent processing.

It should be noted here that the apparatus can implement all the method steps of the embodiment of the method for message notification applied to the UE and can achieve the same effect, so details are not repeated here.

FIG. 17 is a schematic block diagram of an apparatus for message notification applied to a relay UE according to an embodiment of the present application. The apparatus includes:
a transmitting module 21, used to transmit a message to a user equipment (UE), where the message carries public land mobile network (PLMN) information, the PLMN information is PLMN information corresponding to a serving cell of the relay UE and the message is used to assist the UE to determine a PLMN corresponding to the serving cell of the relay UE.

Based on the above embodiment, in an embodiment,
in case that there is only serving cell of the relay UE, the PLMN information indicates PLMN corresponding to the serving cell of the relay UE;
in case that there are multiple serving cells of the relay UE, the PLMN information indicates PLMN corresponding to a primary cell (PCell) of the relay UE;
in case that there are multiple serving cells of the relay UE and the multiple serving cells correspond to different network devices, the PLMN information indicates PLMN corresponding to a primary cell (PCell) of a master network node for the relay UE;
in case that there are multiple serving cells of the relay UE and the multiple serving cells correspond to the same PLMN, the PLMN information indicates the PLMN; or
in case that there are multiple serving cells of the relay UE and the multiple serving cells correspond to different PLMNs, the PLMN information indicates a set of the different PLMNs.

In the present embodiment, various implementations of PLMN information are shown to meet requirements of various service scenarios.

Based on the above embodiments, in the present embodiment, the message transmitted by the relay UE includes any one of:
a relay discovery message;
a response message corresponding to a relay discovery message; and
sidelink control information (SCI) that allocates a resource for a relay discovery message or a response message corresponding to the relay discovery message.

In the present embodiment, the message transmitted by the relay UE may be a message related to relay discovery. The message related to relay discovery may be a relay discovery message or a response message corresponding to a relay discovery message. In the present embodiment, the PLMN corresponding to the serving cell of the relay UE may be directly determined based on the PLMN carried in the relay discovery message or the response message corresponding to the relay discovery message, which can implement the objectives of the embodiments of the present application.

Based on the above embodiments, in the present embodiment, the transmitting the message to the UE, where the message carries PLMN information, includes any one of:
explicitly carrying the PLMN information in the message transmitted by the relay UE; and
implicitly carrying the PLMN information based on a resource used by the message transmitted by the relay UE.

In the present embodiment, in case that the PLMN information is carried in the message transmitted by the relay UE, there are two carrying modes including an explicit carrying mode and an implicit carrying mode. For the explicit carrying mode, the PLMN information is explicitly carried in the message transmitted by the relay UE. For the implicit carrying mode, the PLMN information is implicitly carried based on the resource used by the message transmitted by the relay UE. Regardless of the explicit carrying mode or the implicit carrying mode, the PLMN corresponding to the serving cell of the relay UE can be determined based on the message transmitted by the relay UE, that is, the PLMN can be determined without forwarding broadcast messages from the network through the relay UE, and the problem of delay for relay selection/reselection or service interruption caused by inability to determine the PLMN corresponding to a cell connected to the relay UE after a remote UE receives related messages transmitted by the relay UE may be solved. In addition, according to the embodiments of the present application, the PLMN corresponding to the serving cell of the relay UE can be directly determined based on the PLMN information carried in the message transmitted by the relay UE, unnecessary sidelink broadcast can be reduced, resources are saved and workload for developing standard is decreased.

Based on the above embodiments, in the present embodiment, the explicitly carrying the PLMN information in the message transmitted by the relay UE, includes any one of:
explicitly carrying the PLMN information in a medium access control (MAC) protocol data unit (PDU) carrying the message transmitted by the relay UE; and
explicitly carrying the PLMN information in sidelink control information (SCI) transmitted by the relay UE.

In the present embodiment, the explicitly carrying the PLMN information may be implemented by:
(1) explicitly carrying the PLMN information in a MAC PDU carrying the message transmitted by the relay UE; and/or
(2) explicitly carrying the PLMN information in SCI transmitted by the relay UE.

In the present embodiment, in case that the PLMN information is carried in the message transmitted by the relay UE, one implementation mode may be to explicitly carry the PLMN information in the MAC PDU carrying the message transmitted by the relay UE and the other implementation mode may be to explicitly carry the PLMN information in the SCI transmitted by the relay UE. Through any of these two implementation modes, the PLMN information can be explicitly carried in the message transmitted by the relay UE to implement the objectives of the present application.

Based on the above embodiments, in the present embodiment, the explicitly carrying the PLMN information in a MAC PDU carrying the message transmitted by the relay UE includes at least one of the following schemes:
scheme 1: explicitly carrying the PLMN information in a sidelink-shared channel (SL-SCH) MAC subheader corresponding to a sidelink (SL) MAC PDU carrying the message transmitted by the relay UE; or
scheme 2: explicitly carrying the PLMN information in a MAC subheader corresponding to a sidelink (SL) MAC subPDU carrying the message transmitted by the relay UE.

In the present embodiment, in case that the PLMN information is explicitly carried in the MAC PDU carrying the message transmitted by the relay UE, one implementation mode may be to explicitly carry the PLMN information in the SL-SCH MAC subheader corresponding to the SL MAC PDU carrying the message transmitted by the relay UE and the other implementation mode may be to explicitly carry the PLMN information in the MAC subheader corresponding to the SL MAC subPDU carrying the message transmitted by the relay UE. Through any of these two implementation modes, the PLMN information can be explicitly carried in the MAC PDU carrying the message transmitted by the relay UE to implement the objectives of the present application.

Based on the above embodiments, in the present embodiment, for the scheme 1, a reserved bit in the SL-SCH MAC subheader is used for indicating whether the SL-SCH MAC subheader includes the PLMN information or a predefined value of a V field in the SL-SCH MAC subheader is used to indicate whether the SL-SCH MAC subheader includes the PLMN information; and/or
for the scheme 2, a reserved bit in the MAC subheader corresponding to the SL MAC subPDU is used for indicating whether the MAC subheader includes the PLMN information.

In the present embodiment, for the scheme 1 of explicitly carrying the PLMN information in the SL-SCH MAC subheader corresponding to the SL MAC PDU carrying the message transmitted by the relay UE, a reserved bit in the SL-SCH MAC subheader may be used for indicating whether the SL-SCH MAC subheader includes the PLMN information or a V field in the SL-SCH MAC subheader may be set to a preset value to indicate whether the SL-SCH MAC subheader includes the PLMN information. For the scheme 2 of explicitly carrying the PLMN information in the MAC subheader corresponding to the SL MAC subPDU carrying the message transmitted by the relay UE, a reserved bit in the MAC subheader corresponding to the SL MAC subPDU may be used for indicating whether the MAC subheader includes the PLMN information. By any of these two schemes, the UE may determine whether there is PLMN information based on the reserved bit or the V field, as such, the processing efficiency of the UE is increased.

Based on the above embodiments, in the present embodiment, the explicitly carrying the PLMN information in SCI transmitted by the relay UE, includes at least one of:
in case that the SCI is split into first-stage SCI and second-stage SCI, explicitly carrying the PLMN information only in the first-stage SCI;
in case that the SCI is split into first-stage SCI and second-stage SCI, explicitly carrying the PLMN information only in the second-stage SCI;
in case that the SCI is split into first-stage SCI and second-stage SCI, explicitly carrying the PLMN information in both the first-stage SCI and the second-stage SCI.

In the present embodiment, in case that the PLMN information is explicitly carried in the SCI transmitted by the relay UE, there may be multiple implementations. For example, in case that the SCI is separated into the first-stage SCI and the second-stage SCI, the PLMN information may be only explicitly carried in the first-stage SCI; or the PLMN information may be only explicitly carried in the second-stage SCI; or the PLMN information may be explicitly carried in both the first-stage SCI and the second-stage SCI. In the present embodiment, the PLMN information is explicitly carried in the SCI transmitted by the relay UE, and the objectives of the present application can be achieved.

It should be noted here that the apparatus can implement all the method steps of the embodiment of the method for message notification applied to the relay UE and can achieve the same effect, so details are not repeated here.

FIG. 18 is one of schematic structural diagrams of a user equipment (UE) according to an embodiment of the present application, and the UE includes a memory 1820. a transceiver 1800. and a processor 1810.

In FIG. 18, a bus architecture may include any number of interconnected buses and bridges, which are linked together through various circuits of one or more processors represented by processor 1810 and one or more memories represented by the memory 1820. The bus architecture may further link together various other circuits, such as peripherals, voltage regulators, and power management circuits. The bus interface provides an interface. Transceiver 1800 may include multiple elements, i.e., including a transmitter and a receiver, units for providing communication with various other devices over transmission media including wireless channels, wired channels, fiber optic cables, and the like. The processor 1810 is responsible for managing the bus architecture and general processing, and the memory 1820 can store data used by the processor 1810 when performing operations.

The processor 1810 may be a central processing unit (CPU), an application specific integrated circuit (ASIC), a field-programmable gate array (FPGA), or a complex programmable logic device (CPLD), the processor can also use a multi-core architecture.

The memory 1820 is configured to store a computer program; the transceiver 1800 is configured to transmit and receive data under the control of the processor; the computer program, when executed by the processor 1810, causes the UE to perform the following operations:
receiving a message transmitted by a relay UE, where the message carries public land mobile network (PLMN) information and the PLMN information is PLMN information corresponding to a serving cell of the relay UE; and
determining, based on the message, a PLMN corresponding to the serving cell of the relay UE.

In an embodiment,
in case that there is only one serving cell of the relay UE, the PLMN information indicates PLMN corresponding to the serving cell of the relay UE;
in case that there are multiple serving cells of the relay UE, the PLMN information indicates PLMN corresponding to a primary cell (PCell) of the relay UE;
in case that there are multiple serving cells of the relay UE and the multiple serving cells correspond to different network devices, the PLMN information indicates PLMN corresponding to a primary cell (PCell) of a master network node for the relay UE;
in case that there are multiple serving cells of the relay UE and the multiple serving cells correspond to the same PLMN, the PLMN information indicates the PLMN; or
in case that there are multiple serving cells of the relay UE and the multiple serving cells correspond to different PLMNs, the PLMN information indicates a set of the different PLMNs.

In an embodiment, the message transmitted by the relay UE includes any one of:
a relay discovery message;
a response message corresponding to a relay discovery message; and
sidelink control information (SCI) that allocates a resource for the relay discovery message or the response message corresponding to the relay discovery message.

In an embodiment, the receiving the message transmitted by the relay UE, where the message carries PLMN information, includes any one of:
explicitly carrying the PLMN information in the message transmitted by the relay UE; and
implicitly carrying the PLMN information based on a resource used by the message transmitted by the relay UE.

In an embodiment, the explicitly carrying the PLMN information in the message transmitted by the relay UE includes any one of:
explicitly carrying the PLMN information in a medium access control (MAC) protocol data unit (PDU) carrying the message transmitted by the relay UE; and
explicitly carrying the PLMN information in sidelink control information (SCI) transmitted by the relay UE.

In an embodiment, the explicitly carrying the PLMN information in a MAC PDU carrying the message transmitted by the relay UE includes at least one of the following schemes:
scheme 1: explicitly carrying the PLMN information in a sidelink-shared channel (SL-SCH) MAC subheader corresponding to a sidelink (SL) MAC PDU carrying the message transmitted by the relay UE; or
scheme 2: explicitly carrying the PLMN information in a MAC subheader corresponding to a sidelink (SL) MAC subPDU carrying the message transmitted by the relay UE.

In an embodiment, for the scheme 1, a reserved bit in the SL-SCH MAC subheader is used for indicating whether the SL-SCH MAC subheader includes the PLMN information or a predefined value of a V field in the SL-SCH MAC subheader is used to indicate whether the SL-SCH MAC subheader includes the PLMN information; and/or
for the scheme 2, a reserved bit in the MAC subheader corresponding to the SL MAC subPDU is used for indicating whether the MAC subheader includes the PLMN information.

In an embodiment, the explicitly carrying the PLMN information in the SCI transmitted by the relay UE includes at least one of:
in case that the SCI is split into first-stage SCI and second-stage SCI, explicitly carrying the PLMN information only in the first-stage SCI;
in case that the SCI is split into first-stage SCI and second-stage SCI, explicitly carrying the PLMN information only in the second-stage SCI;
in case that the SCI is split into first-stage SCI and second-stage SCI, explicitly carrying the PLMN information in both the first-stage SCI and the second-stage SCI.

In an embodiment, the computer program, when executed by the processor 1810, further causes the UE to perform at least one of:
for a relay UE meeting a preset condition, determining a PLMN corresponding to a serving cell of the relay UE, and transmitting the PLMN to a non-access stratum (NAS) layer for the UE for assisting the NAS layer for the UE to perform PLMN selection; or
for a relay UE meeting a preset condition, determining a PLMN corresponding to a serving cell of the relay UE, and performing relay UE selection and/or relay UE reselection based on the PLMN.

In an embodiment, for the relay UE meeting the preset condition, the determining the PLMN corresponding to the serving cell of the relay UE, and performing relay UE selection and/or relay UE reselection based on the PLMN, includes:
in case that the UE performs relay UE selection and/or relay UE reselection, selecting, based on the PLMN corresponding to the serving cell of the relay UE, a relay UE of which a serving cell corresponding to a PLMN consistent with a PLMN selected by the UE.

In an embodiment, the preset condition includes at least one of:
a channel quality of a sidelink interface between a UE and a relay UE being greater than a first threshold; or
a channel quality of a Uu interface between a relay UE and a network device being greater than a second threshold.

It should be noted here that the UE according to the present application can implement all the method steps of the embodiment of the method for message notification applied to the UE and can achieve the same effect, so details are not repeated here.

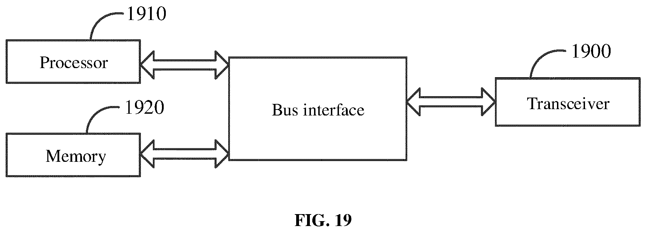

FIG. 19 is one of schematic structural diagrams of a relay UE according to an embodiment of the present application, and the relay UE includes a memory 1920. a transceiver 1900. and a processor 1910.

In FIG. 19, a bus architecture may include any number of interconnected buses and bridges, which are linked together through various circuits of one or more processors represented by processor 1910 and one or more memories represented by the memory 1920. The bus architecture may further link together various other circuits, such as peripherals, voltage regulators, and power management circuits. The bus interface provides an interface. Transceiver 1900 may include multiple elements, i.e., including a transmitter and a receiver, units for providing communication with various other devices over transmission media including wireless channels, wired channels, fiber optic cables, and the like. The processor 1910 is responsible for managing the bus architecture and general processing, and the memory 1920 can store data used by the processor 1910 when performing operations.

The processor 1910 may be a central processing unit (CPU), an application specific integrated circuit (ASIC), a field-programmable gate array (FPGA), or a complex programmable logic device (CPLD), the processor can also use a multi-core architecture.

The memory 1920 is configured to store a computer program; the transceiver 1900 is configured to transmit and receive data under the control of the processor; the computer program, when executed by the processor 1910, causes the relay UE to perform the following operations:
transmitting a message to a user equipment (UE), where the message carries public land mobile network (PLMN) information, the PLMN information is PLMN information corresponding to a serving cell of the relay UE and the message is used to assist the UE to determine a PLMN corresponding to the serving cell of the relay UE.

In an embodiment,
in case that there is only one serving cell of the relay UE, the PLMN information indicates PLMN corresponding to the serving cell of the relay UE;
in case that there are multiple serving cells of the relay UE, the PLMN information indicates PLMN corresponding to a primary cell (PCell) of the relay UE;
in case that there are multiple serving cells of the relay UE and the multiple serving cells correspond to different network devices, the PLMN information indicates PLMN corresponding to a primary cell (PCell) of a master network node for the relay UE;
in case that there are multiple serving cells of the relay UE and the multiple serving cells correspond to the same PLMN, the PLMN information indicates the PLMN; or
in case that there are multiple serving cells of the relay UE and the multiple serving cells correspond to different PLMNs, the PLMN information indicates a set of the different PLMNs.

In an embodiment, the message transmitted by the relay UE includes any one of:
a relay discovery message;
a response message corresponding to a relay discovery message; and
sidelink control information (SCI) that allocates a resource for the relay discovery message or the response message corresponding to the relay discovery message.

In an embodiment, the transmitting the message to the UE, the message carrying PLMN information, includes any one of:
explicitly carrying the PLMN information in the message transmitted by the relay UE; and
implicitly carrying the PLMN information based on a resource used by the message transmitted by the relay UE.

In an embodiment, the explicitly carrying the PLMN information in the message transmitted by the relay UE includes any one of:
explicitly carrying the PLMN information in a medium access control (MAC) protocol data unit (PDU) carrying the message transmitted by the relay UE; and
explicitly carrying the PLMN information in sidelink control information (SCI) transmitted by the relay UE.

In an embodiment, the explicitly carrying the PLMN information in a MAC PDU carrying the message transmitted by the relay UE includes at least one of the following schemes:
scheme 1: explicitly carrying the PLMN information in a sidelink-shared channel (SL-SCH) MAC subheader corresponding to a sidelink (SL) MAC PDU carrying the message transmitted by the relay UE; or
scheme 2: explicitly carrying the PLMN information in a MAC subheader corresponding to a sidelink (SL) MAC subPDU carrying the message transmitted by the relay UE.

In an embodiment, for the scheme 1, a reserved bit in the SL-SCH MAC subheader is used for indicating whether the SL-SCH MAC subheader includes the PLMN information or a predefined value of a V field in the SL-SCH MAC subheader is used to indicate whether the SL-SCH MAC subheader includes the PLMN information; and/or
for the scheme 2, a reserved bit in the MAC subheader corresponding to the SL MAC subPDU is used for indicating whether the MAC subheader includes the PLMN information.

In an embodiment, the explicitly carrying the PLMN information in SCI transmitted by the relay UE includes at least one of:
in case that the SCI is split into first-stage SCI and second-stage SCI, explicitly carrying the PLMN information only in the first-stage SCI;
in case that the SCI is split into first-stage SCI and second-stage SCI, explicitly carrying the PLMN information only in the second-stage SCI;
in case that the SCI is split into first-stage SCI and second-stage SCI, explicitly carrying the PLMN information in both the first-stage SCI and the second-stage SCI.

It should be noted here that the relay UE according to the present application can implement all the method steps of the embodiment of the method for message notification applied to the relay UE and can achieve the same effect, so details are not repeated here.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit can be implemented in the form of hardware or software functional unit.

In case that the integrated unit is implemented in the form of a software functional unit and sold or used as an independent product, it can be stored in a computer readable storage medium. Based on such understanding, the technical solutions of the present application in essence or a part of the technical solutions that contributes to the related art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that can store program codes such as USB flash disk, mobile hard disk, read-only memory (ROM), random access memory (RAM), magnetic disk, or optical disk.

It should be noted here that the above-mentioned apparatus according to the embodiments of the present application can implement all the method steps implemented by the above-mentioned method embodiments, and can achieve the same effect. The same parts and beneficial effects as the same method embodiments are not repeated here.

An embodiment of the present application provides a non-transitory computer readable storage medium having stored thereon a computer program that, when executed by a processor, causes the processor to perform the steps of the methods described above.

The computer readable storage medium may be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

From the foregoing embodiments that the computer readable storage medium stores a computer program, and the computer program is used to cause the processor to perform the steps of methods for message notification.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof can be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions can also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

## Claims

1. A method for message notification, performed by a user equipment, UE, comprising:
receiving (101)
a message transmitted by a relay UE, wherein the message carries public land mobile network, PLMN, information and the PLMN information is PLMN information corresponding to a serving cell of the relay UE (101); and
determining (102), based on the message, a PLMN corresponding to the serving cell of the relay UE (102);
wherein in case that there is only one serving cell of the relay UE, the PLMN information indicates PLMN corresponding to the serving cell of the relay UE;
in case that there are multiple serving cells of the relay UE, the PLMN information indicates PLMN corresponding to a primary cell, PCell, of the relay UE;
in case that there are multiple serving cells of the relay UE and the multiple serving cells correspond to different network devices, the PLMN information indicates PLMN corresponding to a primary cell, PCell, of a master network node for the relay UE;
in case that there are multiple serving cells of the relay UE and the multiple serving cells correspond to a same PLMN, the PLMN information indicates the PLMN; or
in case that there are multiple serving cells of the relay UE and the multiple serving cells correspond to different PLMNs, the PLMN information indicates a set of the different PLMNs.

2. The method of claim 1, wherein the message transmitted by the relay UE comprises any one of:
a relay discovery message;
a response message corresponding to a relay discovery message; and
sidelink control information, SCI, that allocates a resource for a relay discovery message or a response message corresponding to the relay discovery message.

3. The method of claim 1, wherein the receiving the message transmitted by the relay UE, wherein the message carries the PLMN information, comprises any one of:
explicitly carrying the PLMN information in the message transmitted by the relay UE; and
implicitly carrying the PLMN information based on a resource used by the message transmitted by the relay UE.

4. The method of claim 3, wherein the explicitly carrying the PLMN information in the message transmitted by the relay UE, comprises any one of:
explicitly carrying the PLMN information in a medium access control, MAC, protocol data unit, PDU, carrying the message transmitted by the relay UE; and
explicitly carrying the PLMN information in sidelink control information, SCI, transmitted by the relay UE;
wherein the explicitly carrying the PLMN information in the MAC PDU carrying the message transmitted by the relay UE, comprises at least one of the following schemes:
scheme 1: explicitly carrying the PLMN information in a sidelink-shared channel, SL-SCH, MAC subheader corresponding to a sidelink, SL, MAC PDU carrying the message transmitted by the relay UE; or
scheme 2: explicitly carrying the PLMN information in a MAC subheader corresponding to a sidelink, SL, MAC subPDU carrying the message transmitted by the relay UE;
wherein for the scheme 1, a reserved bit in the SL-SCH MAC subheader is used for indicating whether the SL-SCH MAC subheader comprises the PLMN information or a predefined value of a V field in the SL-SCH MAC subheader is used to indicate whether the SL-SCH MAC subheader comprises the PLMN information; and/or
for the scheme 2, a reserved bit in the MAC subheader corresponding to the SL MAC subPDU is used for indicating whether the MAC subheader comprises the PLMN information.

5. The method of claim 4, wherein the explicitly carrying the PLMN information in the SCI transmitted by the relay UE, comprises at least one of:
in case that the SCI is split into first-stage SCI and second-stage SCI, explicitly carrying the PLMN information only in the first-stage SCI;
in case that the SCI is split into first-stage SCI and second-stage SCI, explicitly carrying the PLMN information only in the second-stage SCI; or
in case that the SCI is split into first-stage SCI and second-stage SCI, explicitly carrying the PLMN information in both the first-stage SCI and the second-stage SCI.

6. The method of claim 1, further comprising at least one of:
for a relay UE meeting a preset condition, determining a PLMN corresponding to a serving cell of the relay UE, and transmitting the PLMN to a non-access stratum, NAS, layer for the UE for assisting the NAS layer for the UE to perform PLMN selection; or
for a relay UE meeting a preset condition, determining a PLMN corresponding to a serving cell of the relay UE, and performing relay UE selection and/or relay UE reselection based on the PLMN.

7. The method of claim 6, wherein for the relay UE meeting the preset condition, the determining the PLMN corresponding to the serving cell of the relay UE, and performing relay UE selection and/or relay UE reselection based on the PLMN, comprises:
in case that the UE performs relay UE selection and/or relay UE reselection, selecting, based on the PLMN corresponding to the serving cell of the relay UE, a relay UE of which a serving cell corresponding to a PLMN consistent with a PLMN selected by the UE.

8. The method of claim 6, wherein the preset condition comprises at least one of:
a channel quality of a sidelink interface between a UE and a relay UE being greater than a first threshold; or
a channel quality of a Uu interface between a relay UE and a network device being greater than a second threshold.

9. A method for message notification, performed by a relay user equipment, UE, comprising:
transmitting (201) a message to a user equipment, UE, wherein the message carries public land mobile network, PLMN, information, the PLMN information is PLMN information corresponding to a serving cell of the relay UE and the message is used to assist the UE to determine a PLMN corresponding to the serving cell of the relay UE (201);
wherein in case that there is only one serving cell of the relay UE, the PLMN information indicates PLMN corresponding to the serving cell of the relay UE;
in case that there are multiple serving cells of the relay UE, the PLMN information indicates PLMN corresponding to a primary cell, PCell, of the relay UE;
in case that there are multiple serving cells of the relay UE and the multiple serving cells correspond to different network devices, the PLMN information indicates PLMN corresponding to a primary cell, PCell, of a master network node for the relay UE;
in case that there are multiple serving cells of the relay UE and the multiple serving cells correspond to the same PLMN, the PLMN information indicates the PLMN; or
in case that there are multiple serving cells of the relay UE and the multiple serving cells correspond to different PLMNs, the PLMN information indicates a set of the different PLMNs.

10. The method of claim 9, wherein the message transmitted by the relay UE comprises any one of:
a relay discovery message;
a response message corresponding to a relay discovery message; or
sidelink control information, SCI, that allocates a resource for a relay discovery message or a response message corresponding to the relay discovery message.

11. The method of claim 9, wherein the transmitting the message to the UE, wherein the message carries the PLMN information, comprises any one of:
explicitly carrying the PLMN information in the message transmitted by the relay UE; and
implicitly carrying the PLMN information based on a resource used by the message transmitted by the relay UE;
wherein the explicitly carrying the PLMN information in the message transmitted by the relay UE, comprises any one of:
explicitly carrying the PLMN information in a medium access control, MAC, protocol data unit, PDU, carrying the message transmitted by the relay UE; and
explicitly carrying the PLMN information in sidelink control information, SCI, transmitted by the relay UE;
wherein the explicitly carrying the PLMN information in the MAC PDU carrying the message transmitted by the relay UE, comprises at least one of the following schemes:
scheme 1: explicitly carrying the PLMN information in a sidelink-shared channel, SL-SCH, MAC subheader corresponding to a sidelink, SL, MAC PDU carrying the message transmitted by the relay UE; or
scheme 2: explicitly carrying the PLMN information in a MAC subheader corresponding to a sidelink, SL, MAC subPDU carrying the message transmitted by the relay UE.

12. The method of claim 11, wherein for the scheme 1, a reserved bit in the SL-SCH MAC subheader is used for indicating whether the SL-SCH MAC subheader comprises the PLMN information or a V field in the SL-SCH MAC subheader is set to a preset value to indicate whether the SL-SCH MAC subheader comprises the PLMN information; and/or
for the scheme 2, a reserved bit in the MAC subheader corresponding to the SL MAC subPDU is used for indicating whether the MAC subheader comprises the PLMN information.

13. An apparatus for message notification and for use in a user equipment, UE, the apparatus comprising:
a receiving module (11), used to receive a message transmitted by a relay UE, wherein the message carries public land mobile network, PLMN, information and the PLMN information is PLMN information corresponding to a serving cell of the relay UE; and
a determining module (12), used to determine, based on the message, a PLMN corresponding to the serving cell of the relay UE;
wherein in case that there is only one serving cell of the relay UE, the PLMN information indicates PLMN corresponding to the serving cell of the relay UE;
in case that there are multiple serving cells of the relay UE, the PLMN information indicates PLMN corresponding to a primary cell, PCell, of the relay UE;
in case that there are multiple serving cells of the relay UE and the multiple serving cells correspond to different network devices, the PLMN information indicates PLMN corresponding to a primary cell, PCell, of a master network node for the relay UE;
in case that there are multiple serving cells of the relay UE and the multiple serving cells correspond to a same PLMN, the PLMN information indicates the PLMN; or
in case that there are multiple serving cells of the relay UE and the multiple serving cells correspond to different PLMNs, the PLMN information indicates a set of the different PLMNs.

14. An apparatus for message notification and for use in a relay user equipment, UE, the apparatus comprising:
a transmitting module (21), used to transmit a message to a user equipment, UE, wherein the message carries public land mobile network, PLMN, information, the PLMN information is PLMN information corresponding to a serving cell of the relay UE and the message is used to assist the UE to determine a PLMN corresponding to the serving cell of the relay UE;
wherein in case that there is only one serving cell of the relay UE, the PLMN information indicates PLMN corresponding to the serving cell of the relay UE;
in case that there are multiple serving cells of the relay UE, the PLMN information indicates PLMN corresponding to a primary cell, PCell, of the relay UE;
in case that there are multiple serving cells of the relay UE and the multiple serving cells correspond to different network devices, the PLMN information indicates PLMN corresponding to a primary cell, PCell, of a master network node for the relay UE;
in case that there are multiple serving cells of the relay UE and the multiple serving cells correspond to a same PLMN, the PLMN information indicates the PLMN; or
in case that there are multiple serving cells of the relay UE and the multiple serving cells correspond to different PLMNs, the PLMN information indicates a set of the different PLMNs.

## Patentansprüche

1. Verfahren zur Nachrichtenbenachrichtigung, durchgeführt von einem Benutzergerät, UE, umfassend:
Empfangen (101) einer von einem Relais-UE übertragenen Nachricht, wobei die Nachricht Informationen eines öffentlichen Landfunknetzwerks, PLMN, trägt und die PLMN-Informationen PLMN-Informationen sind, die einer bedienenden Zelle des Relais-UE (101) entsprechen; und
Bestimmen (102), basierend auf der Nachricht, eines PLMN, das der bedienenden Zelle des Relais-UE (102) entspricht;
wobei für den Fall, dass nur eine bedienende Zelle des Relais-UE vorhanden ist, die PLMN-Informationen ein PLMN angeben, das der bedienenden Zelle des Relais-UE entspricht;
für den Fall, dass mehrere bedienende Zellen des Relais-UE vorhanden sind, die PLMN-Informationen ein PLMN angeben, das einer Primärzelle, PCell, des Relais-UE entspricht;
für den Fall, dass mehrere bedienende Zellen des Relais-UE vorhanden sind und die mehreren bedienenden Zellen unterschiedlichen Netzwerkvorrichtungen entsprechen, die PLMN-Informationen ein PLMN angeben, das einer Primärzelle, PCell, eines Master-Netzwerkknotens für das Relais-UE entspricht;
für den Fall, dass mehrere bedienende Zellen des Relais-UE vorhanden sind und die mehreren bedienenden Zellen einem gleichen PLMN entsprechen, die PLMN-Informationen das PLMN angeben; oder
für den Fall, dass mehrere bedienende Zellen des Relais-UE vorhanden sind und die mehreren bedienenden Zellen unterschiedlichen PLMNs entsprechen, die PLMN-Informationen einen Satz der unterschiedlichen PLMNs angeben.

2. Verfahren nach Anspruch 1, wobei die von dem Relais-UE übertragene Nachricht eines von Folgendem umfasst:
eine Relais-Entdeckungsnachricht;
eine einer Relais-Entdeckungsnachricht entsprechende Antwortnachricht; und
Sidelink-Steuerinformationen, SCI, die eine Ressource für eine Relais-Entdeckungsnachricht oder eine der Relais-Entdeckungsnachricht entsprechende Antwortnachricht zuweisen.

3. Verfahren nach Anspruch 1, wobei das Empfangen der von dem Relais-UE übertragenen Nachricht, wobei die Nachricht die PLMN-Informationen trägt, eines von Folgendem umfasst:
explizites Tragen der PLMN-Informationen in der von dem Relais-UE übertragenen Nachricht; und
implizites Tragen der PLMN-Informationen basierend auf einer Ressource, die von der von dem Relais-UE übertragenen Nachricht verwendet wird.

4. Verfahren nach Anspruch 3, wobei das explizite Tragen der PLMN-Informationen in der von dem Relais-UE übertragenen Nachricht eines von Folgendem umfasst:
explizites Tragen der PLMN-Informationen in einer Medium-Access-Control-Protokolldateneinheit, MAC-PDU, die die von dem Relais-UE übertragene Nachricht trägt; und
explizites Tragen der PLMN-Informationen in Sidelink-Steuerinformationen, SCI, die von dem Relais-UE übertragen werden;
wobei das explizite Tragen der PLMN-Informationen in der MAC-PDU, die die von dem Relais-UE übertragene Nachricht trägt, mindestens eines der folgenden Schemata umfasst:
Schema 1: explizites Tragen der PLMN-Informationen in einem Sidelink-Shared-Channel-MAC-Subheader, SL-SCH-MAC-Subheader, der einer Sidelink-MAC-PDU, SL-MAC-PDU, entspricht, die die von dem Relais-UE übertragene Nachricht trägt; oder
Schema 2: explizites Tragen der PLMN-Informationen in einem MAC-Subheader, der einer Sidelink-MAC-subPDU, SL-MAC-subPDU, entspricht, die die von dem Relais-UE übertragene Nachricht trägt;
wobei für das Schema 1 ein reserviertes Bit in dem SL-SCH-MAC-Subheader zum Angeben, ob der SL-SCH-MAC-Subheader die PLMN-Informationen umfasst, verwendet wird, oder ein vordefinierter Wert eines V-Feldes in dem SL-SCH-MAC-Subheader verwendet wird, um anzugeben, ob der SL-SCH-MAC-Subheader die PLMN-Informationen umfasst; und/oder
für das Schema 2 ein reserviertes Bit in dem MAC-Subheader, der der SL-MAC-subPDU entspricht, zum Angeben, ob der MAC-Subheader die PLMN-Informationen umfasst, verwendet wird.

5. Verfahren nach Anspruch 4, wobei das explizite Tragen der PLMN-Informationen in den von dem Relais-UE übertragenen SCI mindestens eines von Folgendem umfasst:
für den Fall, dass die SCI in SCI der ersten Stufe und SCI der zweiten Stufe aufgeteilt sind, explizites Tragen der PLMN-Informationen nur in den SCI der ersten Stufe;
für den Fall, dass die SCI in SCI der ersten Stufe und SCI der zweiten Stufe aufgeteilt sind, explizites Tragen der PLMN-Informationen nur in den SCI der zweiten Stufe; oder
für den Fall, dass die SCI in SCI der ersten Stufe und SCI der zweiten Stufe aufgeteilt sind, explizites Tragen der PLMN-Informationen sowohl in den SCI der ersten Stufe als auch in den SCI der zweiten Stufe.

6. Verfahren nach Anspruch 1, ferner umfassend mindestens eines von Folgendem:
für ein Relais-UE, das eine voreingestellte Bedingung erfüllt, Bestimmen eines PLMN, das einer bedienenden Zelle des Relais-UE entspricht, und Übertragen des PLMN an eine Nicht-Zugriffs-Stratum-Schicht, NAS-Schicht, für das UE, um die NAS-Schicht für das UE dabei zu unterstützen, eine PLMN-Auswahl durchzuführen; oder
für ein Relais-UE, das eine voreingestellte Bedingung erfüllt, Bestimmen eines PLMN, das einer bedienenden Funkzelle des Relais-UE entspricht, und Durchführen einer Relais-UE-Auswahl und/oder Relais-UE-Neuauswahl basierend auf dem PLMN.

7. Verfahren nach Anspruch 6, wobei für das Relais-UE, das die voreingestellte Bedingung erfüllt, das Bestimmen des PLMN, das der bedienenden Zelle des Relais-UE entspricht, und das Durchführen einer Relais-UE-Auswahl und/oder Relais-UE-Neuauswahl basierend auf dem PLMN, Folgendes umfasst:
für den Fall, dass das UE eine Relais-UE-Auswahl und/oder Relais-UE-Neuauswahl durchführt, Auswählen, basierend auf dem PLMN, das der bedienenden Zelle des Relais-UE entspricht, eines Relais-UE, dessen bedienende Zelle einem PLMN entspricht, das konsistent mit einem von dem UE ausgewählten PLMN ist.

8. Verfahren nach Anspruch 6, wobei die voreingestellte Bedingungen mindestens eines von Folgendem umfasst:
eine Kanalqualität einer Sidelink-Schnittstelle zwischen einem UE und einem Relais-UE ist größer als ein erster Schwellenwert; oder
eine Kanalqualität einer Uu-Schnittstelle zwischen einem Relais-UE und einer Netzwerkvorrichtung ist größer als ein zweiter Schwellenwert.

9. Verfahren zur Nachrichtenbenachrichtigung, durchgeführt von einem Relais-Benutzergerät, UE, umfassend:
Übertragen (201) einer Nachricht an ein Benutzergerät, UE, wobei die Nachricht Informationen eines öffentlichen Landfunknetzwerks, PLMN, trägt und die PLMN-Informationen PLMN-Informationen sind, die einer bedienenden Zelle des Relais-UE entsprechen, und die Nachricht verwendet wird, um das UE dabei zu unterstützen, ein PLMN zu bestimmen, das der bedienenden Zelle des Relais-UE entspricht (201);
wobei für den Fall, dass nur eine bedienende Zelle des Relais-UE vorhanden ist, die PLMN-Informationen ein PLMN angeben, das der bedienenden Zelle des Relais-UE entspricht;
für den Fall, dass mehrere bedienende Zellen des Relais-UE vorhanden sind, die PLMN-Informationen ein PLMN angeben, das einer Primärzelle, PCell, des Relais-UE entspricht;
für den Fall, dass mehrere bedienende Zellen des Relais-UE vorhanden sind und die mehreren bedienenden Zellen unterschiedlichen Netzwerkvorrichtungen entsprechen, die PLMN-Informationen ein PLMN angeben, das einer Primärzelle, PCell, eines Master-Netzwerkknotens für das Relais-UE entspricht;
für den Fall, dass mehrere bedienende Zellen des Relais-UE vorhanden sind und die mehreren bedienenden Zellen einem gleichen PLMN entsprechen, die PLMN-Information das PLMN angeben; oder
für den Fall, dass mehrere bedienende Zellen des Relais-UE vorhanden sind und die mehreren bedienenden Zellen unterschiedlichen PLMNs entsprechen, die PLMN-Informationen einen Satz der unterschiedlichen PLMNs angeben.

10. Verfahren nach Anspruch 9, wobei die von dem Relais-UE übertragene Nachricht eines von Folgendem umfasst:
eine Relais-Entdeckungsnachricht;
eine einer Relais-Entdeckungsnachricht entsprechende Antwortnachricht; oder
Sidelink-Steuerinformationen, SCI, die eine Ressource für eine Relais-Entdeckungsnachricht oder eine der Relais-Entdeckungsnachricht entsprechende Antwortnachricht zuweisen.

11. Verfahren nach Anspruch 9, wobei das Übertragen der Nachricht an das UE, wobei die Nachricht die PLMN-Informationen trägt, eines von Folgendem umfasst:
explizites Tragen der PLMN-Informationen in der von dem Relais-UE übertragenen Nachricht; und
implizites Tragen der PLMN-Informationen basierend auf einer Ressource, die von der von dem Relais-UE übertragenen Nachricht verwendet wird;
wobei das explizite Tragen der PLMN-Informationen in der von dem Relais-UE übertragenen Nachricht eines von Folgendem umfasst:
explizites Tragen der PLMN-Informationen in einer Medium-Access-Control-Protokolldateneinheit, MAC-PDU, die die von dem Relais-UE übertragene Nachricht trägt; und
explizites Tragen der PLMN-Informationen in Sidelink-Steuerinformationen, SCI, die von dem Relais-UE übertragen werden;
wobei das explizite Tragen der PLMN-Informationen in der MAC-PDU, die die von dem Relais-UE übertragene Nachricht trägt, mindestens eines der folgenden Schemata umfasst:
Schema 1: explizites Tragen der PLMN-Informationen in einem Sidelink-Shared-Channel-MAC-Subheader, SL-SCH-MAC-Subheader, der einer Sidelink-MAC-PDU, SL-MAC-PDU, entspricht, die die von dem Relais-UE übertragene Nachricht trägt; oder
Schema 2: explizites Tragen der PLMN-Informationen in einem MAC-Subheader, der einer Sidelink-MAC-subPDU, SL-MAC-subPDU, entspricht, die die von dem Relais-UE übertragene Nachricht trägt.

12. Verfahren nach Anspruch 11, wobei für das Schema 1 ein reserviertes Bit in dem SL-SCH-MAC-Subheader zum Angeben, ob der SL-SCH-MAC-Subheader die PLMN-Informationen umfasst, verwendet wird, oder ein V-Feld in dem SL-SCH-MAC-Subheader auf einen voreingestellten Wert eingestellt wird, um anzugeben, ob der SL-SCH-MAC-Subheader die PLMN-Informationen umfasst; und/oder
für das Schema 2 ein reserviertes Bit in dem MAC-Subheader, der der SL-MAC-subPDU entspricht, zum Angeben, ob der MAC-Subheader die PLMN-Informationen umfasst, verwendet wird.

13. Einrichtung zur Nachrichtenbenachrichtigung und zur Verwendung in einem Benutzergerät, UE, die Einrichtung umfassend:
ein Empfangsmodul (11), das verwendet wird, um eine von einem Relais-UE übertragene Nachricht zu empfangen, wobei die Nachricht Informationen eines öffentlichen Landfunknetzwerks, PLMN, trägt und die PLMN-Informationen PLMN-Informationen sind, die einer bedienenden Zelle des Relais-UE entsprechen; und
ein Bestimmungsmodul (12), das verwendet wird, um basierend auf der Nachricht ein PLMN zu bestimmen, das der bedienenden Zelle des Relais-UE entspricht;
wobei für den Fall, dass nur eine bedienende Zelle des Relais-UE vorhanden ist, die PLMN-Informationen ein PLMN angeben, das der bedienenden Zelle des Relais-UE entspricht;
für den Fall, dass mehrere bedienende Zellen des Relais-UE vorhanden sind, die PLMN-Informationen ein PLMN angeben, das einer Primärzelle, PCell, des Relais-UE entspricht;
für den Fall, dass mehrere bedienende Zellen des Relais-UE vorhanden sind und die mehreren bedienenden Zellen unterschiedlichen Netzwerkvorrichtungen entsprechen, die PLMN-Informationen ein PLMN angeben, das einer Primärzelle, PCell, eines Master-Netzwerkknotens für das Relais-UE entspricht;
für den Fall, dass mehrere bedienende Zellen des Relais-UE vorhanden sind und die mehreren bedienenden Zellen einem gleichen PLMN entsprechen, die PLMN-Informationen das PLMN angeben; oder
für den Fall, dass mehrere bedienende Zellen des Relais-UE vorhanden sind und die mehreren bedienenden Zellen unterschiedlichen PLMNs entsprechen, die PLMN-Informationen einen Satz der unterschiedlichen PLMNs angeben.

14. Vorrichtung zur Nachrichtenbenachrichtigung und zur Verwendung in einem Relais-Benutzergerät, UE, die Vorrichtung umfassend:
ein Übertragungsmodul (21), das verwendet wird, um eine Nachricht an ein Benutzergerät, UE, zu übertragen, wobei die Nachricht Informationen eines öffentlichen Landfunknetzwerks, PLMN, trägt und die PLMN-Informationen PLMN-Informationen sind, die einer bedienenden Zelle des Relais-UE entsprechen, und die Nachricht verwendet wird, um das UE dabei zu unterstützen, ein PLMN zu bestimmen, das der bedienenden Zelle des Relais-UE entspricht;
wobei für den Fall, dass nur eine bedienende Zelle des Relais-UE vorhanden ist, die PLMN-Informationen ein PLMN angeben, das der bedienenden Zelle des Relais-UE entspricht;
für den Fall, dass mehrere bedienende Zellen des Relais-UE vorhanden sind, die PLMN-Informationen ein PLMN angeben, das einer Primärzelle, PCell, des Relais-UE entspricht;
für den Fall, dass mehrere bedienende Zellen des Relais-UE vorhanden sind und die mehreren bedienenden Zellen unterschiedlichen Netzwerkvorrichtungen entsprechen, die PLMN-Informationen ein PLMN angeben, das einer Primärzelle, PCell, eines Master-Netzwerkknotens für das Relais-UE entspricht;
für den Fall, dass mehrere bedienende Zellen des Relais-UE vorhanden sind und die mehreren bedienenden Zellen einem gleichen PLMN entsprechen, die PLMN-Informationen das PLMN angeben; oder
für den Fall, dass mehrere bedienende Zellen des Relais-UE vorhanden sind und die mehreren bedienenden Zellen unterschiedlichen PLMNs entsprechen, die PLMN-Informationen einen Satz der unterschiedlichen PLMNs angeben.

## Revendications

1. Procédé pour une notification de message, réalisé par un équipement utilisateur, UE, comprenant :
la réception 101) d'un message transmis par un UE relais, dans lequel le message transporte des informations de réseau mobile terrestre public, RMTP, et les informations de RMTP sont des informations de RMTP correspondant à une cellule de desserte de l'UE relais (101) ; et
la détermination (102), sur la base du message, d'un RMTP correspondant à la cellule de desserte de l'UE relais (102) ;
dans lequel, dans un cas où il n'existe qu'une seule cellule de desserte de l'UE relais, les informations de RMTP indiquent un RMTP correspondant à la cellule de desserte de l'UE relais ;
dans le cas où il existe de multiples cellules de desserte de l'UE relais, les informations de RMTP indiquent un RMTP correspondant à une cellule primaire, PCell, de l'UE relais ;
dans le cas où il existe de multiples cellules de desserte de l'UE relais et que les multiples cellules de desserte correspondent à différents dispositifs de réseau, les informations de RMTP indiquent qu'un RMTP correspond à une cellule primaire, PCell, d'un nœud de réseau maître pour l'UE relais ;
dans le cas où il existe de multiples cellules de desserte de l'UE relais et que les multiples cellules de desserte correspondent à un même RMTP, les informations de RMTP indiquent le RMTP ; ou
dans le cas où il existe de multiples cellules de desserte de l'UE relais et que les multiples cellules de desserte correspondent à différents RMTP, les informations de RMTP indiquent un ensemble des différents RMTP.

2. Procédé selon la revendication 1, dans lequel le message transmis par l'UE relais comprend l'un quelconque parmi :
un message de découverte de relais ;
un message de réponse correspondant à un message de découverte de relais ; et
des informations de commande de liaison latérale, SCI, qui allouent une ressource pour un message de découverte de relais ou un message de réponse correspondant au message de découverte de relais.

3. Procédé selon la revendication 1, dans lequel la réception du message transmis par l'UE relais, dans lequel le message transporte les informations de RMTP, comprend l'un quelconque parmi :
le transport explicite des informations de RMTP dans le message transmis par l'UE relais ; et
le transport implicite des informations de RMTP sur la base d'une ressource utilisée par le message transmis par l'UE relais.

4. Procédé selon la revendication 3, dans lequel le transport explicite des informations de RMTP dans le message transmis par l'UE relais, comprend l'un quelconque parmi :
le transport explicite des informations de RMTP dans une unité de données de protocole, PDU, de commande d'accès au support, MAC, transportant le message transmis par l'UE relais ; et
le transport explicite des informations de RMTP dans des informations de commande de liaison latérale, SCI, transmises par l'UE relais ;
dans lequel le transport explicite des informations de RMTP dans la PDU MAC transportant le message transmis par l'UE relais, comprend au moins l'un des schémas suivants :
schéma 1 : le transport explicite des informations de RMTP dans un sous-en-tête MAC de canal partagé de liaison latérale, SCH-SL, correspondant à une PDU MAC de liaison latérale, SL, transportant le message transmis par l'UE relais ; ou
schéma 2 : le transport explicite des informations de RMTP dans un sous-en-tête MAC correspondant à une sous-PDU MAC de liaison latérale, SL, transportant le message transmis par l'UE relais ;
dans lequel, pour le schéma 1, un bit réservé dans le sous-en-tête MAC SCH-SL est utilisé pour indiquer si le sous-en-tête MAC SCH-SL comprend les informations de RMTP ou une valeur prédéfinie d'un champ V dans le sous-en-tête MAC SCH-SL est utilisée pour indiquer si le sous-en-tête MAC SCH-SL comprend les informations de RMTP ; et/ou
pour le schéma 2, un bit réservé dans le sous-en-tête MAC correspondant à la sous-PDU MAC SL est utilisé pour indiquer si le sous-en-tête MAC comprend les informations de RMTP.

5. Procédé selon la revendication 4, dans lequel le transport explicite des informations de RMTP dans les SCI transmises par l'UE relais, comprend au moins l'un parmi :
dans le cas où les SCI sont divisées en SCI de première étape et SCI de seconde étape, le transport explicite des informations de RMTP uniquement dans les SCI de première étape ;
dans le cas où les SCI sont divisées en SCI de première étape et SCI de seconde étape, le transport explicite des informations de RMTP uniquement dans les SCI de seconde étape ; ou
dans le cas où les SCI sont divisées en SCI de première étape et en SCI de seconde étape, le transport explicite des informations de RMTP à la fois dans les SCI de première étape et les SCI de seconde étape.

6. Procédé selon la revendication 1, comprenant en outre au moins l'un parmi :
pour un UE relais satisfaisant à une condition prédéfinie, la détermination d'un RMTP correspondant à une cellule de desserte de l'UE relais, et la transmission du RMTP à une couche de strate de non-accès, NAS, pour l'UE pour aider la couche NAS pour l'UE à réaliser une sélection de RMTP ; ou
pour un UE relais satisfaisant à une condition prédéfinie, la détermination d'un RMTP correspondant à une cellule de desserte de l'UE relais, et la réalisation d'une sélection d'UE relais et/ou d'une nouvelle sélection d'UE relais sur la base du RMTP.

7. Procédé selon la revendication 6, dans lequel, pour l'UE relais satisfaisant à la condition prédéfinie, la détermination du RMTP correspondant à la cellule de desserte de l'UE relais, et la réalisation de la sélection de l'UE relais et/ou de la nouvelle sélection de l'UE relais sur la base du RMTP, comprend :
dans le cas où l'UE réalise une sélection d'UE relais et/ou une nouvelle sélection d'UE relais, la sélection, sur la base du RMTP correspondant à la cellule de desserte de l'UE relais, d'un UE relais dont une cellule de desserte correspond à un RMTP compatible avec un RMTP sélectionné par l'UE.

8. Procédé selon la revendication 6, dans lequel la condition prédéfinie comprend au moins l'un parmi :
une qualité de canal d'une interface de liaison latérale entre un UE et un UE relais étant supérieure à un premier seuil ; ou
une qualité de canal d'une interface Uu entre un UE relais et un dispositif de réseau étant supérieure à un second seuil.

9. Procédé de notification de message, réalisé par un équipement utilisateur, UE, relais, comprenant :
la transmission (201) d'un message à un équipement utilisateur, UE, dans lequel le message transporte des informations de réseau mobile terrestre public, RMTP, les informations de RMTP sont des informations de RMTP correspondant à une cellule de desserte de l'UE relais et le message est utilisé pour aider l'UE à déterminer un RMTP correspondant à la cellule de desserte de l'UE relais (201) ;
dans lequel, dans un cas où il n'existe qu'une seule cellule de desserte de l'UE relais, les informations de RMTP indiquent un RMTP correspondant à la cellule de desserte de l'UE relais ;
dans le cas où il existe de multiples cellules de desserte de l'UE relais, les informations de RMTP indiquent un RMTP correspondant à une cellule primaire, PCell, de l'UE relais ;
dans le cas où il existe de multiples cellules de desserte de l'UE relais et que les multiples cellules de desserte correspondent à différents dispositifs de réseau, les informations de RMTP indiquent qu'un RMTP correspond à une cellule primaire, PCell, d'un nœud de réseau maître pour l'UE relais ;
dans le cas où il existe de multiples cellules de desserte de l'UE relais et que les multiples cellules de desserte correspondent au même RMTP, les informations de RMTP indiquent le RMTP ; ou
dans le cas où il existe de multiples cellules de desserte de l'UE relais et que les multiples cellules de desserte correspondent à différents RMTP, les informations de RMTP indiquent un ensemble des différents RMTP.

10. Procédé selon la revendication 9, dans lequel le message transmis par l'UE relais comprend l'un quelconque parmi :
un message de découverte de relais ;
un message de réponse correspondant à un message de découverte de relais ; ou
des informations de commande de liaison latérale, SCI, qui allouent une ressource pour un message de découverte de relais ou un message de réponse correspondant au message de découverte de relais.

11. Procédé selon la revendication 9, dans lequel la transmission du message à l'UE, dans lequel le message transporte les informations de RMTP, comprend l'un quelconque parmi :
le transport explicite des informations de RMTP dans le message transmis par l'UE relais ; et
le transport implicite des informations de RMTP sur la base d'une ressource utilisée par le message transmis par l'UE relais ;
dans lequel le transport explicite des informations de RMTP dans le message transmis par l'UE relais, comprend l'un quelconque parmi :
le transport explicite des informations de RMTP dans une unité de données de protocole, PDU, de commande d'accès au support, MAC, transportant le message transmis par l'UE relais ; et
le transport explicite des informations de RMTP dans des informations de commande de liaison latérale, SCI, transmises par l'UE relais ;
dans lequel le transport explicite des informations de RMTP dans la PDU MAC transportant le message transmis par l'UE relais, comprend au moins l'un des schémas suivants :
schéma 1 : le transport explicite des informations de RMTP dans un sous-en-tête MAC de canal partagé de liaison latérale, SCH-SL, correspondant à une PDU MAC de liaison latérale, SL, transportant le message transmis par l'UE relais ; ou
schéma 2 : le transport explicite des informations de RMTP dans un sous-en-tête MAC correspondant à une sous-PDU MAC de liaison latérale, SL, transportant le message transmis par l'UE relais.

12. Procédé selon la revendication 11, dans lequel, pour le schéma 1, un bit réservé dans le sous-en-tête MAC SCH-SL est utilisé pour indiquer si le sous-en-tête MAC SCH-SL comprend les informations de RMTP ou si un champ V dans le sous-en-tête MAC SCH-SL est défini sur une valeur prédéfinie pour indiquer si le sous-en-tête MAC SCH-SL comprend les informations de RMTP ; et/ou
pour le schéma 2, un bit réservé dans le sous-en-tête MAC correspondant à la sous-PDU MAC SL est utilisé pour indiquer si le sous-en-tête MAC comprend les informations de RMTP.

13. Appareil pour une notification de message et destiné à être utilisé dans un équipement utilisateur, UE, l'appareil comprenant :
un module de réception (11), utilisé pour recevoir un message transmis par un UE relais, dans lequel le message transporte des informations de réseau mobile terrestre public, RMTP, et les informations de RMTP sont des informations de RMTP correspondant à une cellule de desserte de l'UE relais ; et
un module de détermination (12), utilisé pour déterminer, sur la base du message, un RMTP correspondant à la cellule de desserte de l'UE relais ;
dans lequel, dans un cas où il n'existe qu'une seule cellule de desserte de l'UE relais, les informations de RMTP indiquent un RMTP correspondant à la cellule de desserte de l'UE relais ;
dans le cas où il existe de multiples cellules de desserte de l'UE relais, les informations de RMTP indiquent un RMTP correspondant à une cellule primaire, PCell, de l'UE relais ;
dans le cas où il existe de multiples cellules de desserte de l'UE relais et que les multiples cellules de desserte correspondent à différents dispositifs de réseau, les informations de RMTP indiquent qu'un RMTP correspond à une cellule primaire, PCell, d'un nœud de réseau maître pour l'UE relais ;
dans le cas où il existe de multiples cellules de desserte de l'UE relais et que les multiples cellules de desserte correspondent à un même RMTP, les informations de RMTP indiquent le RMTP ; ou
dans le cas où il existe de multiples cellules de desserte de l'UE relais et que les multiples cellules de desserte correspondent à différents RMTP, les informations de RMTP indiquent un ensemble des différents RMTP.

14. Appareil pour une notification de message et destiné à être utilisé dans un équipement utilisateur, UE, relais, l'appareil comprenant :
un module de transmission (21), utilisé pour transmettre un message à un équipement utilisateur, UE, dans lequel le message transporte des informations de réseau mobile terrestre public, RMTP, les informations de RMTP sont des informations de RMTP correspondant à une cellule de desserte de l'UE relais et le message est utilisé pour aider l'UE à déterminer un RMTP correspondant à la cellule de desserte de l'UE relais ;
dans lequel, dans un cas où il n'existe qu'une seule cellule de desserte de l'UE relais, les informations de RMTP indiquent un RMTP correspondant à la cellule de desserte de l'UE relais ;
dans le cas où il existe de multiples cellules de desserte de l'UE relais, les informations de RMTP indiquent un RMTP correspondant à une cellule primaire, PCell, de l'UE relais ;
dans le cas où il existe de multiples cellules de desserte de l'UE relais et que les multiples cellules de desserte correspondent à différents dispositifs de réseau, les informations de RMTP indiquent qu'un RMTP correspond à une cellule primaire, PCell, d'un nœud de réseau maître pour l'UE relais ;
dans le cas où il existe de multiples cellules de desserte de l'UE relais et que les multiples cellules de desserte correspondent à un même RMTP, les informations de RMTP indiquent le RMTP ; ou
dans le cas où il existe de multiples cellules de desserte de l'UE relais et que les multiples cellules de desserte correspondent à différents RMTP, les informations de RMTP indiquent un ensemble des différents RMTP.
